(19) Europäisches Patentamt
European Patent Office
Office européen des brevets

(11) Veröffentlichungsnummer: **0 131 542**
**B1**

(12) # EUROPÄISCHE PATENTSCHRIFT

(45) Veröffentlichungstag der Patentschrift: **19.04.89**

(51) Int. Cl.⁴: **C 09 B 62/08**, D 06 P 3/66

(21) Anmeldenummer: **84810275.2**

(22) Anmeldetag: **06.06.84**

(54) **Reaktivfarbstoffe, deren Herstellung und Verwendung.**

(30) Priorität: **10.06.83 CH 3187/83**

(43) Veröffentlichungstag der Anmeldung: **16.01.85 Patentblatt 85/3**

(45) Bekanntmachung des Hinweises auf die Patenterteilung: **19.04.89 Patentblatt 89/16**

(84) Benannte Vertragsstaaten: **CH DE FR GB IT LI**

(56) Entgegenhaltungen:
**EP-A-0 013 879**
**DE-A-2 738 823**
**GB-A-1 263 083**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Tzikas, Athanassios, Dr., Muttenzerstrasse 78, CH- 4133 Pratteln (CH)**
Erfinder: **Käser, Adolf, Dr., Spitzackerstrasse 118, CH- 4103 Bottmingen (CH)**

EP 0 131 542 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Der vorliegenden Erfindung lag die Aufgabe zugrunde, neue, verbesserte Reaktivfarbstoffe zu finden, die Baumwolle in den Farbtönen gelb-orange-rot färben. Die neuen Farbstoffe sollten sich vor allem durch hohe Fixierausbeuten und hohe Faser-Farbstoff-Bindungsstabilitäten auszeichnen, sie sollten besonders für das Färben nach dem Ausziehverfahren und dem Kaltverweilverfahren und auch für den Druck geeignet sein, und ausserdem sollten die nicht auf der Faser fixierten Anteile leicht auswaschbar sein.

Ferner wurden für die mit den neuen Farbstoffen erhältlichen Färbungen und Drucke gute Allgemeinechtheiten, beispielsweise Licht- und Nassechtheiten, gefordert.

Es hat sich gezeigt, dass die weiter unten definierten neuen bireaktiven Farbstoffe, die zwei endständige Aminofluor-1,3,5-triazinylreste enthalten, den gestellten Anforderungen entsprechen.

Gegenstand der Erfindung sind Reaktivfarbstoffe der Formel

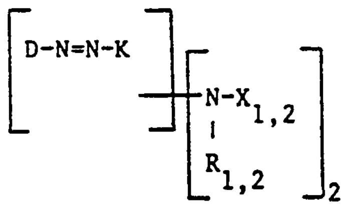 (1),

worin

D der Rest einer Diazokomponente der Benzol-, Naphthalin-, Azobenzol-, Naphthylazobenzol-, Azonaphthalin- oder Phenylazonaphthalinreihe,

K der Rest einer Kupplungskomponente der Benzol- oder Naphthalinreihe oder der heterocyclischen Reihe, ausgenommen ein Pyrazolonrest,

$R_1$ und $R_2$ unabhängig voneinander Wasserstoff oder ein gegebenenfalls substituierter $C_{1-4}$-Alkylrest, und

$X_1$ und $X_2$ unabhängig voneinander unsubstituiertes oder substituiertes Aminofluor-s-triazinyl ist, ausgenommen die Reaktivfarbstoffe der Formel

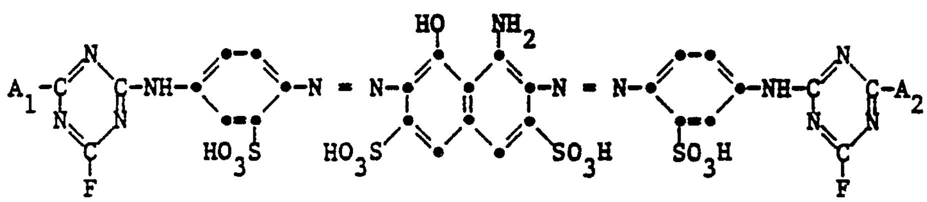

worin $A_1$ und $A_2$ unabhängig voneinander je ein über ein Stickstoffatom an den s-Triazinring gebundener Rest eines Amins ist.

Die Reste D und K in Formel (1) können weitersubstituiert sein, beispielsweise durch Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Alkanoylaminogruppen mit 1 bis 4 Kohlenstoffatomen, wie Acetylamino oder Propionylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Äthyl- wie N-Methylsulfamoyl, N-Äthylsulfamoyl, N-Propylsulfamoyl, N-Isopropylsulfamoyl oder N-Butylsulfamoyl, Ureido, Hydroxy, Carboxy, Sulfomethyl oder Sulfo. Bevorzugt sind die Substituenten Methyl, Äthyl, Methoxy, Äthoxy, Acetylamino, Chlor, Brom, Ureido, Hydroxy, Carboxy, Sulfomethyl und insbesondere Sulfo.

Die Reste D und K in Formel (1) können als Substituenten weitere cyclische Reste enthalten die direkt oder über ein Brückenglied, wie -O-, -CO-, $-CH_2-$, $-CH_2CH_2-$, -NH-CO-NH-, $-SO_2-$, -NH- oder -NH-CO- an das oben unter Formel (1) definierte Grundgerüst von D bzw. K gebunden sind, oder an dieses ankondesiert sind. In diesem Falle können die Reste $-N(R_1)-X_1$ bzw. $-N(R_2)-X_2$ auch an jene cyclischen Substituenten gebunden sein. Die cyclischen Substituenten selbst können weitersubstituiert sein, z. B. durch $C_{1-4}$-Alkyl, $C_{1-4}$-Alkoxy, Halogen, Carboxy, Sulfo usw., wie oben in der Erläuterung der möglichen Substituenten von D und K angegeben ist. Ein

cyclischer Substituent, an welchen der Reaktivrest gebunden ist, liegt z. B. vor, wenn man als Diazokomponente 4,4'-Diaminobiphenyl, 4,4'-Diaminodiphenyläther oder eine 1-Amino-4-(aminonaphtho[1,2-d]-triazol-2-yl)-benzol-2-sulfonsäure verwendet, oder wenn man als Kupplungskomponente eine Aminobenzoyl-H- oder -K-Säure verwendet.

Die Reste $R_1$ und $R_2$ sind, falls es sich um Alkylreste handelt, geradkettig oder verzweigt; sie können weitersubstituiert sein, z. B. durch Halogen, Hydroxy, Cyan, $C_{1-4}$-Alkoxy, Carboxy oder Sulfo. Als Beispiele für $R_1$ und $R_2$ seien die folgenden Reste genannt: Methyl, Äthyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Äthoxycarbonylmethyl, β-Methoxyäthyl, β-Äthoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind $R_1$ und $R_2$ unabhängig voneinander Wasserstoff oder Methyl.

Als unsubstituierte oder substituierte Aminogruppen in den Fluor-1,3,5-triazinylresten $X_1$ und $X_2$ kommen in Betracht: $-NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Reste sowie die N-heterocyclischen Ringe können weitersubstituiert sein, z. B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt: $-NH_2$, Methylamino, Äthylamino, Propylamino, Isopropylamino, Butylamino, Hexylamino, β-Methoxyäthylamino, γ-Methoxypropylamino, β-Äthoxyäthylamino, N-N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Äthyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphtyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino und Piperazino.

Die Triazinylaminoreste $-N(R_1)-X_1$ und $-N(R_2)-X_2$ in Formel (1) sind an verschiedene oder an gleiche Reste von Ausgangskomponenten, D und K, gebunden. Vorzugsweise sind die Reste $-N(R_1)-X_1$ und $-N(R_2)-X_2$ an je einen der beiden Reste D bzw. K gebunden. In diesem Fall haben die Reaktivfarbstoffe die Formel

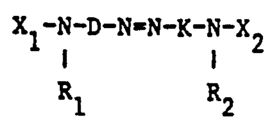

(1a)

Wenn beide Reste $-N(R_1)-X_1$ und $-N(R_2)-X_2$ an den gleichen Rest einer Ausgangskomponente, D oder K, gebunden sind, so ist dies insbesondere der Rest der Kupplungskomponente K. Die Reaktivfarbstoffe entsprechen dann der Formel

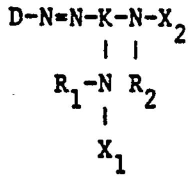

(1b)

In den obigen Formeln (1a) und (1b) haben die Symbole D, K, $R_1$, $R_2$, $X_1$ und $X_2$ die gleichen Bedeutungen wie unter Formel (1).

Ferner sind in Betracht zu ziehen, Reaktivfarbstoffe der Formel (1a), worin der Rest D oder K noch einen weiteren Reaktivrest einschliesst, sowie Reaktivfarbstoffe der Formel (1b), worin der Rest D noch einen weiteren Reaktivrest einschliesst. Somit sind auch tri- und tetrareaktive Farbstoffe umfasst. Die zusätzlichen, in

D oder K eingeschlossenen Reaktivreste können, wie $X_1$ und $X_2$, über Aminogruppen, oder in anderer Weise, z. B. durch eine direkte Bindung an das Grundgerüst von D bzw. K gebunden sein.

Bevorzugt sind Reaktivfarbstoffe der Formel (1), worin $X_1$ und $X_2$ unabhängig voneinander je ein Rest der Formel

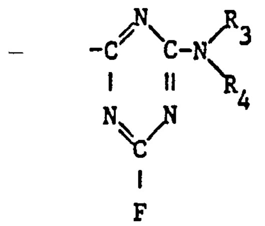

(2)

ist, worin $R_3$ und $R_4$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenathyl, Cyclohexyl, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenalls substituiert ist durch Halogen, Nitro, $C_{1-4}$-Alkoxy, $C_{1-4}$-Alkanoylamino, Hydroxy, Carboxy oder Sulfo, ist, oder worin $R_3$ und $R_4$ zusammen mit dem Aminostickstoffatom einen Morpholino-, Piperidino- oder Piperazinorest bilden.

Bevorzugt sind insbesondere Reaktivfarbstoffe der Formel

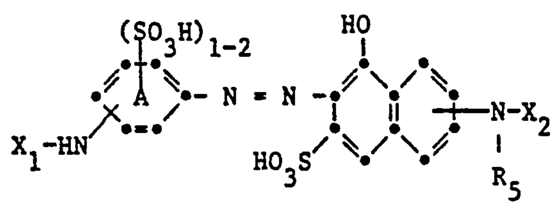

(3),

worin $R_5$ Wasserstoff oder $C_{1-4}$-Alkyl ist, $X_1$ und $X_2$ die unter Formel (2) angegebenen Bedeutungen haben, und der Benzolring A gegebenenfalls weitersubstituiert ist;

und Reaktivfarbstoffe der Formel

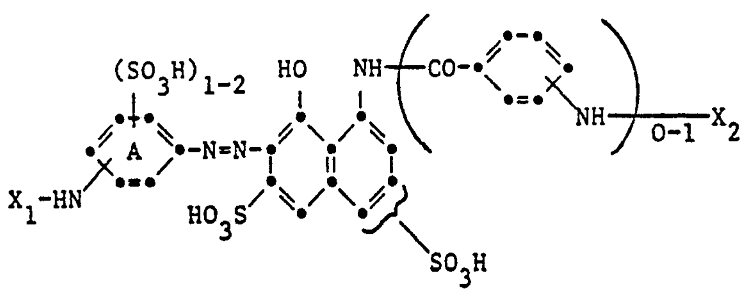

(4),

worin $X_1$ und $X_2$ die unter Formel (2) angegebenen Bedeutungen haben, und der Benzolring A gegebenenfalls weitersubstituiert ist.

Weitere wertvolle Vertreter sind die Reaktivfarbstoffe der folgenden Formeln:

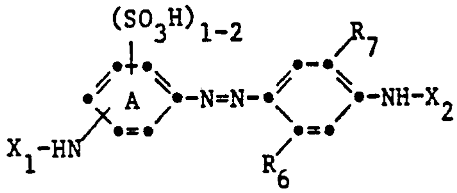

(5)

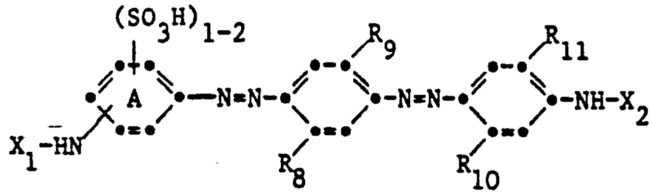

(6)

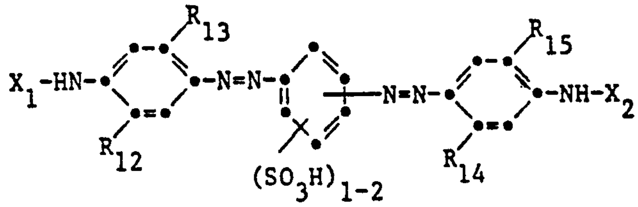

(7)

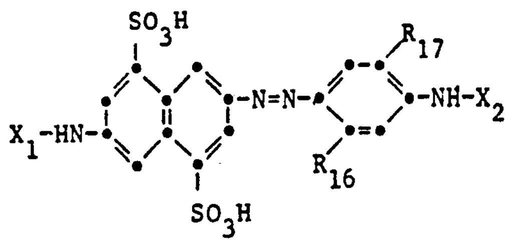

(8)

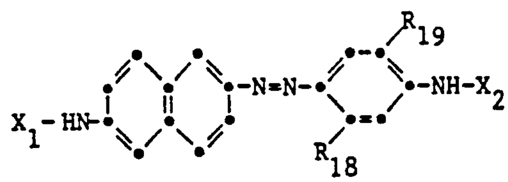

(9)

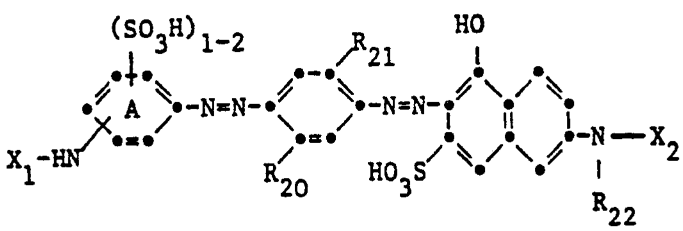

(10)

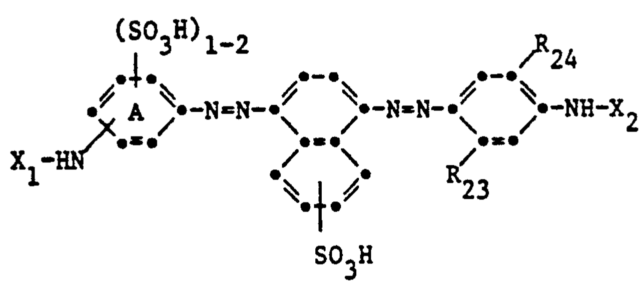

(11)

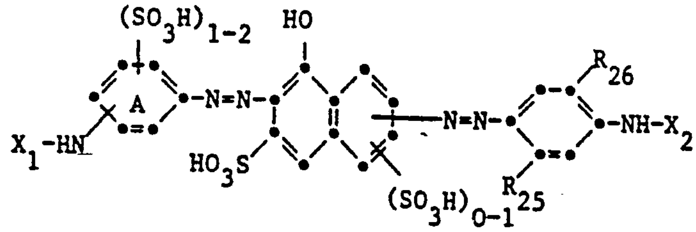

(12)

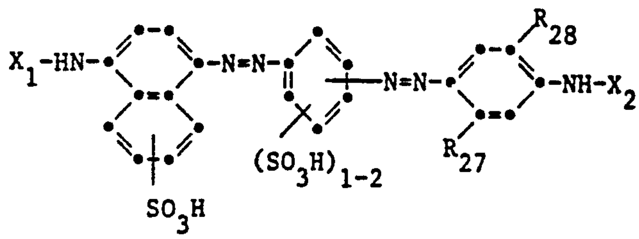

(13)

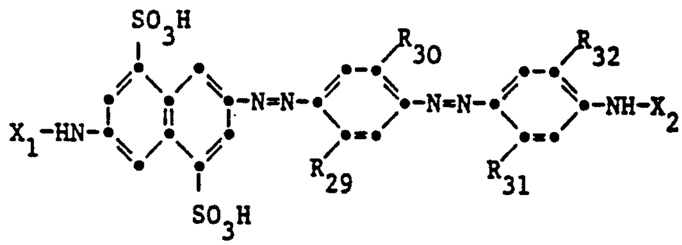

(14)

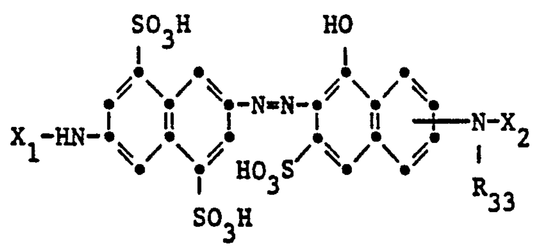

(15)

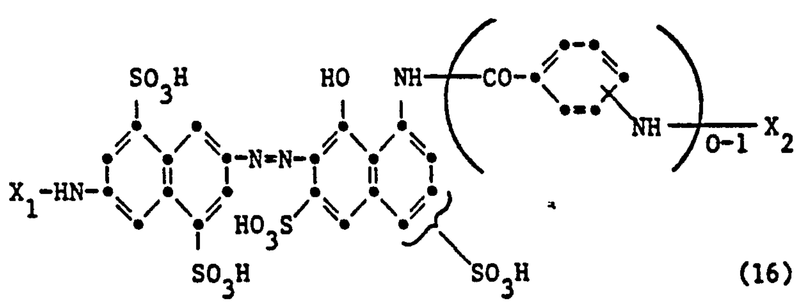

(16)

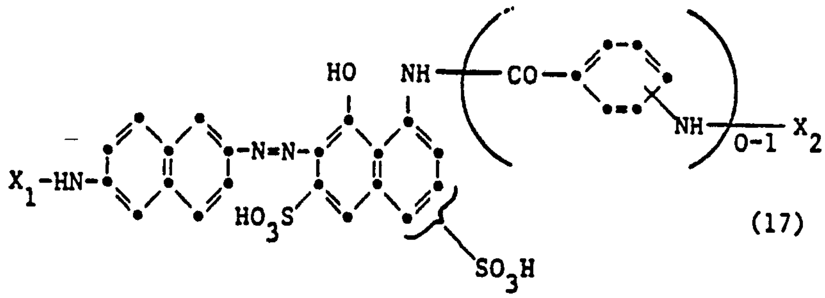

(17)

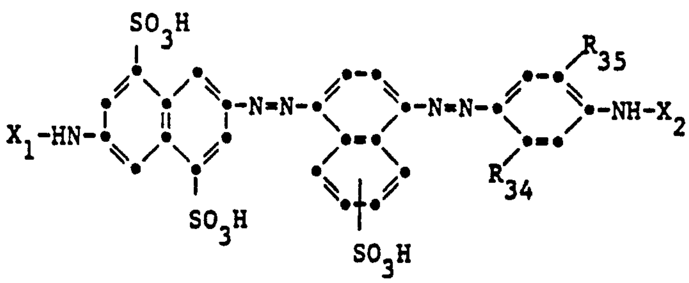

(18)

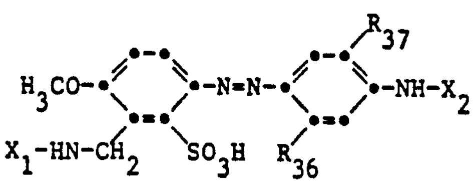

(19)

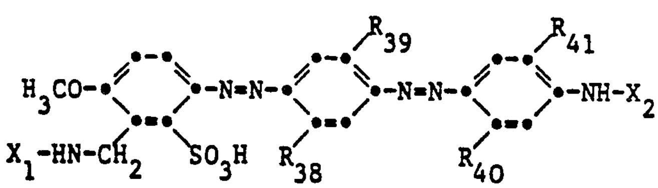

(20)

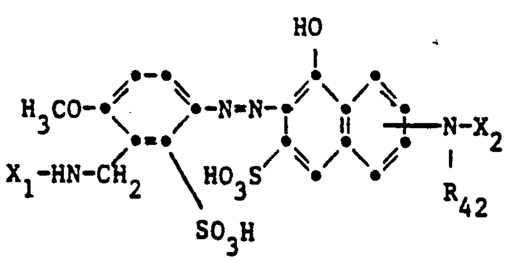

(21)

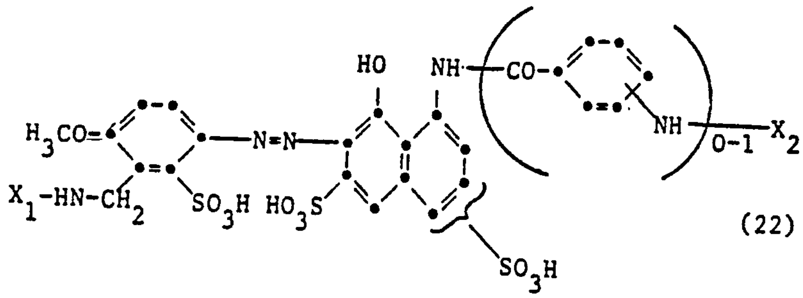

(22)

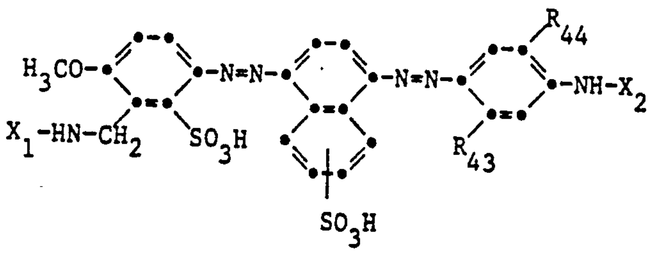

(23)

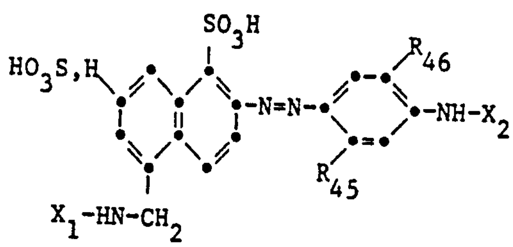

(24)

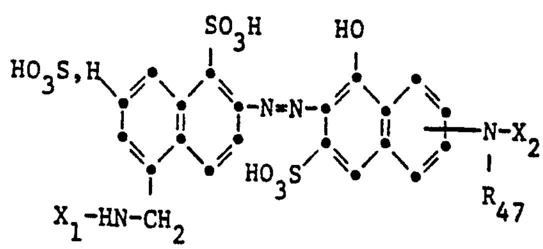

(25)

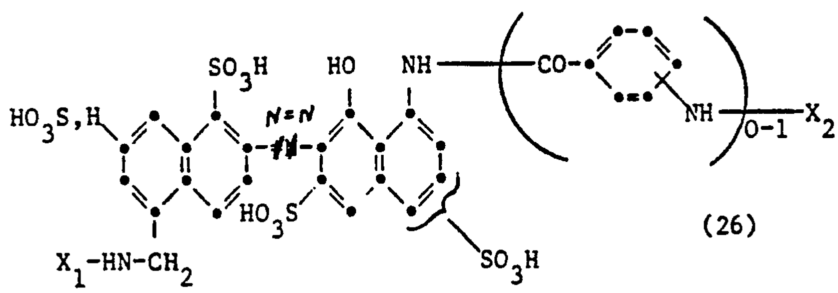

(26)

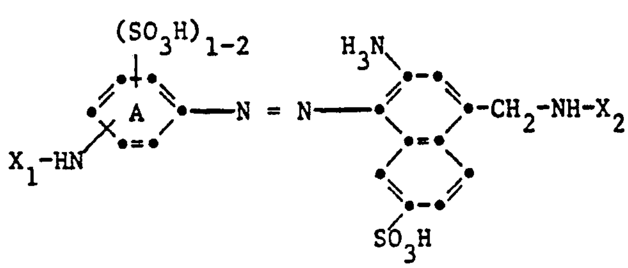

(27)

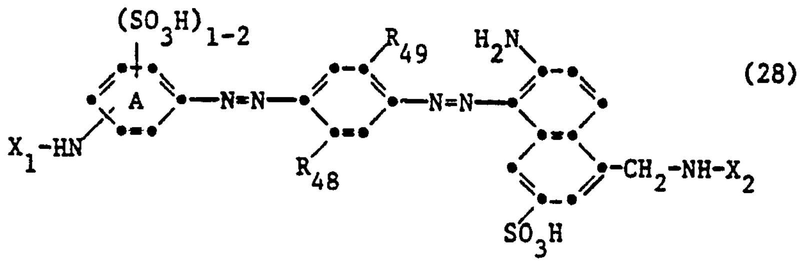

(28)

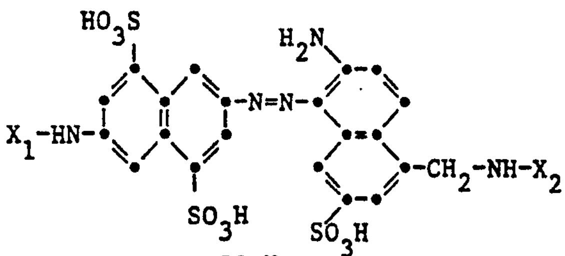

(29)

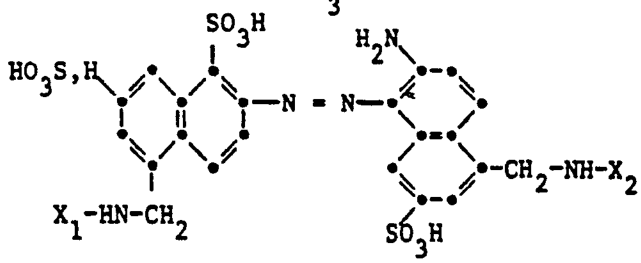

(30)

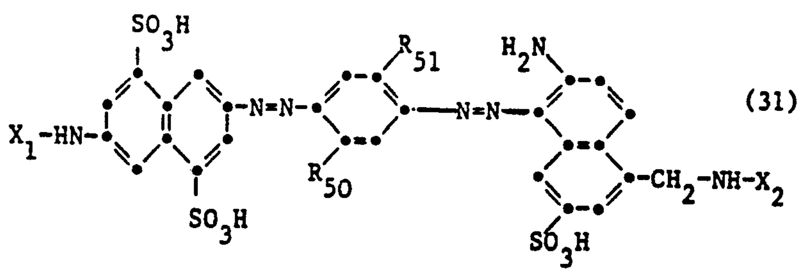

(31)

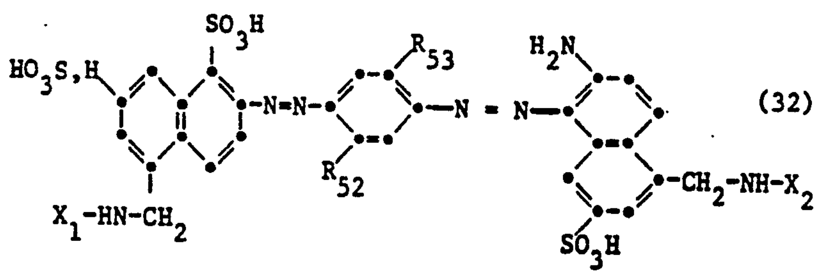

(32)

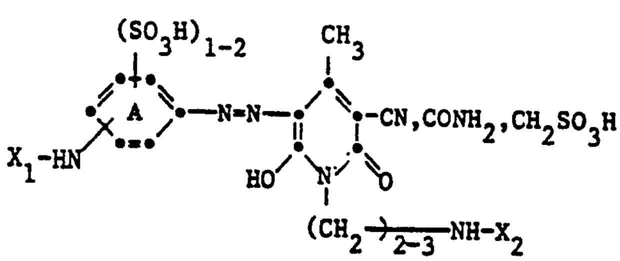

(33)

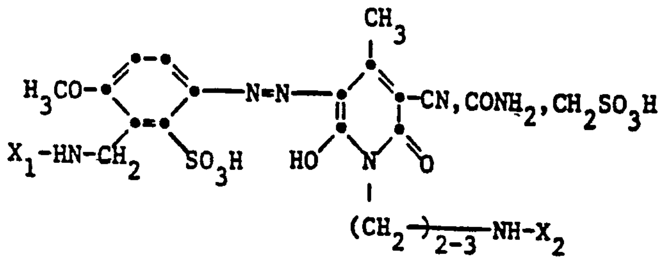

(34)

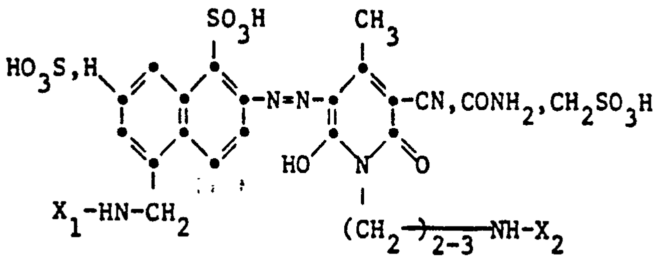

(35)

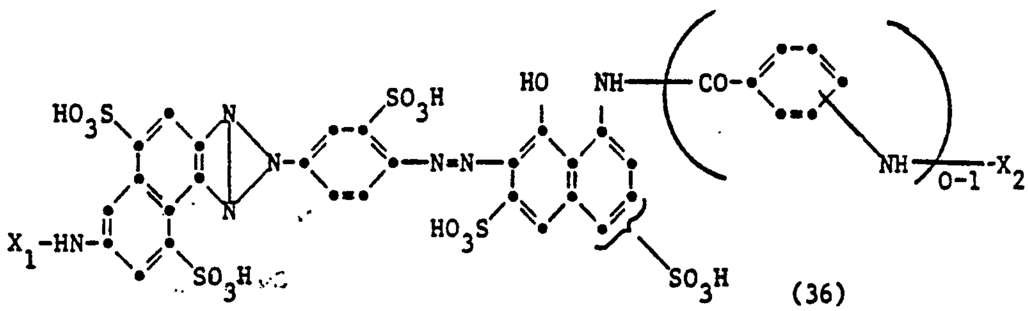

(36)

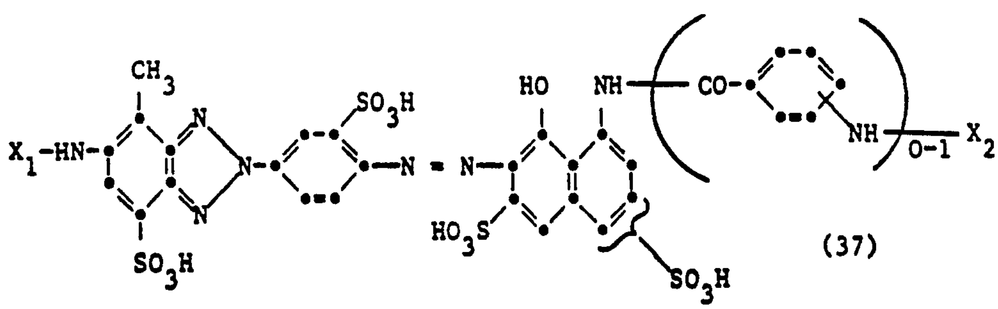

(37)

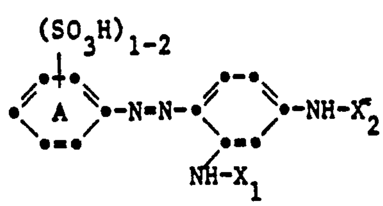

(38)

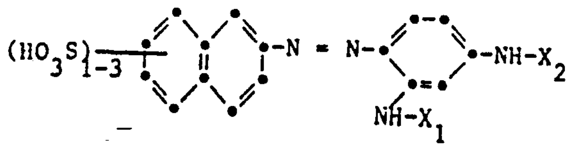

(39)

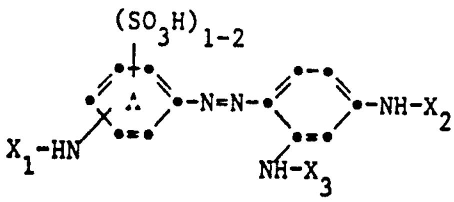

(40)

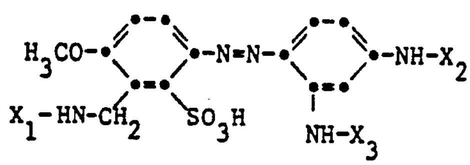

(41)

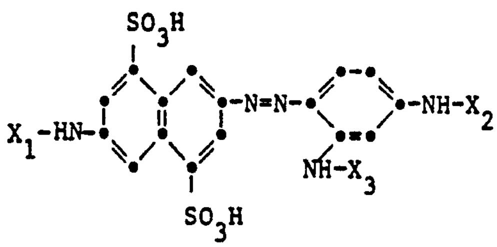

(42)

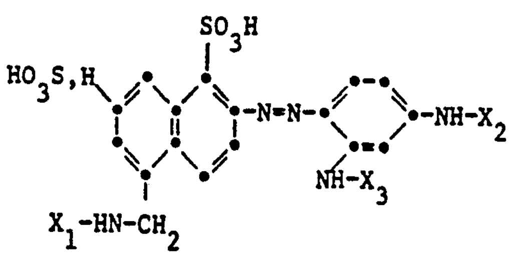

(43)

In den Formeln (5) bis (43) bedeuten
die Reste $R_{22}$, $R_{33}$, $R_{42}$ und $R_{47}$, Wasserstoff oder $C_{1-4}$-Alkyl;
die übrigen Reste $R_6$ bis $R_{21}$, $R_{23}$ bis $R_{32}$, $R_{34}$ bis $R_{41}$, $R_{43}$ bis $R_{46}$ und $R_{48}$ bis $R_{53}$ sind Wasserstoff, $C_1$-$C_4$-Alkyl,

$C_1$-$C_4$-Alkoxy, $C_1$-$C_4$-Alkanoylamino, Ureido oder Halogen, wobei die Reste $R_6$, $R_7$,... etc. die zu ein und derselben Formel gehören, voneinander unabhängig sind; $X_1$ und $X_2$ und gegebenenfalls $X_3$ haben die unter Formel (2) angegebenen Bedeutungen; und die Benzolringe A sind gegebenenfalls weitersubstituiert.

Vorzugsweise bedeuten die Reste $R_{22}$, $R_{33}$, $R_{42}$ und $R_{47}$ Wasserstoff, Methyl oder Äthyl, und die übrigen oben benannten Reste $R_6$ bis $R_{21}$,... usw., Wasserstoff, Methyl, Äthyl, Methoxy, Äthoxy, Acetylamino, Ureido oder Chlor. Vorzugsweise sind in den Reaktivfarbstoffen der Formeln (5), (6), (10) bis (12), (27), (28), (33), (38) und (40) die Benzolringe A nicht weitersubstituiert.

In den bevorzugten Reaktivfarbstoffen der Formeln (3) und (4) sind die Benzolringe A vorzugsweise ebenfalls nicht weitersubstituiert; als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet. Der Rest $R_5$ in Formel (3) ist insbesondere Wasserstoff, Methyl oder Äthyl.

Bevorzugt sind insbesondere Reaktivfarbstoffe der Formeln (1) und (3) bis (43), worin $X_1$ und $X_2$ und gegebenenfalls $X_3$ unabhängig voneinander je ein Rest der Formel (2) ist, worin die Aminogruppe $-NR_3R_4$: $-NH_2$, N-β-Hydroxyäthylamino, N,N-Di-β-Hydroxyäthylamino, β-Sulfoäthylamino, Phenylamino, das gegebenenfalls im Phenylkern substituiert ist durch Chlor, Methyl, Äthyl, Methoxy, Äthoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Äthyl, N-Sulfo-$C_{1-4}$-alkyl-N-phenylamino, das gegebenenfalls im Phenylkern substituiert ist durch Chlor, Methyl oder Äthyl, N-Hydroxy-$C_{1-4}$-alkyl-N-phenylamino, oder Sulfonaphthylamino ist.

In Betracht zu ziehen sind ferner auch Reaktivfarbstoffe der Formel (1), worin einer der beiden Reste $-N(R_1)-X_1$ und $-N(R_2)-X_2$ oder beide, über einen Rest der Formel

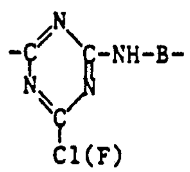

(44)

an den Chromophor gebunden sind. In diesem Falle ist der Rest $-N(R_1)-X_1$ bzw. $-N(R_2)-X_2$ an B gebunden; B ist ein gegebenenfalls substituiertes aliphatisches oder aromatisches Brückenglied. Das Brückenglied B ist vorzugsweise ein Alkylen- oder Arylenrest. So kann B ein langer (z. B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z. B. Äthylen, Propylen, Butylen, Hexylen oder Cyclohexylen. Als Arylenrest ist B z. B. ein Naphthylenrest, der Rest eines Diphenyls oder Stilbens oder insbesondere ein Phenylenrest. Der Rest B kann weitere Substituenten enthalten, z. B. Halogenatome, wie Fluor, Chlor und Brom, Alkylgruppen mit 1 bis 4 Kohlenstoffatomen, wie Methyl, Äthyl und Propyl, Alkoxygruppen mit 1 bis 4 Kohlenstoffatomen, wie Methoxy, Äthoxy, Propyloxy und Isopropyloxy, Carboxy oder Sulfo.

Das Verfahren zur Herstellung der Reaktivfarbstoffe der Formel (1) ist dadurch gekennzeichnet, dass man Diazokomponenten der Formel

$$D - NH_2 \qquad (45)$$

oder ihre Vorprodukte, Kupplungskomponenten der Formel

$$H - K \qquad (46)$$

2 Äquivalente 2,4,6-Trifluor-s-triazin und 2 Äquivalente von gleichen oder verschiedenen Aminen durch Diazotierung, Kupplung und Kondensation in geeigneter Reihenfolge zu Reaktivfarbstoffen der Formel (1) umsetzt.

Die Diazokomponenten der Formel (45) und die Kupplungskomponenten der Formel (46) müssen zusammen in den Resten D und K zwei Aminogruppen, $-N(R_1)H$ und $-N(R_2)H$, und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit dem Fluortriazin durch Verseifen bzw. Reduzieren in die $NH_2$ Gruppe übergeführt wird.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Fluortriazinrestes eintritt, muss ein Zwischenprodukt, welches Acetylaminogruppen (siehe weiter unten) enthält, zwecks Abspaltung der Acetylgruppen verseift werden, bevor mit einem Aminodifluortriazin oder Trifluortriazin kondensiert wird.

Wichtige Verfahrensvarianten sind dadurch gekennzeichnet,

1. dass man eine Aminoacetylamino-benzolsulfonsäure diazotiert und auf Kupplungskomponente, welche eine Acetylaminogruppe enthält, kuppelt, den erhaltenen Azofarbstoff verseift, den entstandenen Diaminoazofarbstoff mit 2 Äquivalenten 2,4,6-Trifluor-s-triazin kondensiert, und zuletzt mit 2 Äquivalenten eines Amins $HNR_3R_4$ umsetzt, oder dass man mit 2 Äquivalenten eines Aminodifluortriazins kondensiert. Statt einer Amino-acetylamino-benzolsulfonsäure und einer Kupplungskomponente, welche eine Acetylaminogruppe enthält, kann man auch eine Amino-nitro-benzolsulfonsäure und eine Kupplungskomponente, welche eine Nitrogruppe enthält, verwenden, in dem erhaltenen Dinitroazofarbstoff die Nitrogruppen durch Reduktion, z. B. mit Eisen nach BéCHAMPS, in Aminogruppen umwandeln, und den entstandenen Diaminoazofarbstoffe, wie oben beschrieben, weiterverarbeiten;

2. dass man eine Kupplungskomponente, welche eine acylierbare Aminogruppe enthält mit einem Aminodifluortriazin kondensiert, dass man ferner 2,4,6-Trifluor-s-triazin mit einer Diazokomponente, z. B. einer Diaminobenzolsulfonsäure, und einem Amin kondensiert, das sekundäre Kondensationsprodukt diazotiert und auf das anfangs hergestellte Kondensationsprodukt der Kupplungskomponente kuppelt;

3. dass man eine Kupplungskomponente, welche eine acylierbare Aminogruppe aufweist, mit 2,4,6-Trifluor-s-triazin kondensiert, das erhaltene primäre Kondensationsprodukt mit einem Amin kondensiert, und das sekundäre Kondensationsprodukt mit dem diazotierten sekundären Kondensationsprodukt aus 2,4,6-Trifluor-s-triazin, einer Diazokomponente und einem weiteren Amin kuppelt;

4. dass man 2,4,6-Trifluor-s-triazin mit einem Amin und anschliessend mit einer Diaminobenzolsulfonsäure kondensiert, das sekundäre Kondensationsprodukt diazotiert und auf eine Kupplungskomponente, welche eine diazotierbare Aminogruppe enthält, kuppelt, die erhaltene Monoazoverbindung diazotiert und auf eine weitere Kupplungskomponente, welche eine acylierbare Aminogruppe enthält, kuppelt, dann die freie acylierbare Aminogruppe im Rest der zweiten Kupplungskomponente mit 2,4,6-Trifluor-s-triazin kondensiert, und zum Schluss mit 1 Äquivalent eines Amin kondensiert, oder dass man mit 1 Äquivalent eines Aminodifluor-s-triazins kondensiert. Die beiden Amine, die nacheinander eingesetzt werden, können gleich öder verschieden sein. Das zu Anfang hergestellte sekundäre Kondensationsprodukt kann auch in umgekehrter Reihenfolge: Kondensation von 2,4,6-Trifluor-s-triazin mit einer Diaminobenzolsulfonsäure und anschliessende Kondensation mit einem Amin, erhalten werden;

5. dass man eine Diazokomponente, z. B. eine Diaminobenzolsulfonsäure, diazotiert und auf eine Kupplungskomponente, welche eine acylierbare Aminogruppe enthält, kuppelt, die Aminogruppe am Rest der Kupplungskomponente mit dem primären Kondensationsprodukt aus 2,4,6-Trifluor-s-triazin und einem Amin selektiv acyliert, die erhaltene Monoazoverbindung diazotiert und auf eine weitere Kupplungskomponente, welche eine acylierbare Aminogruppe enthält, kuppelt, und die entstandene Disazoverbindung zuletzt mit dem primären Kondensationsprodukt aus 2,4,6-Trifluor-s-triazin und einem Amin kondensiert.

Welche Reaktion bei der Herstellung eines sekundären Kondensationsproduktes aus Amin $HNR_3R_4$, 2,4,6-Trifluor-1,3,5-triazin und Diaminobenzolsulfonsäure zweckmässigerweise zuerst ausgeführt wird, die des Trifluortriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen.

In der oben gegebenen Erläuterung der wichtigsten Verfahrensvarianten wurden als Diazokomponenten mehrfach Diaminobenzolsulfonsäure bzw. Aminoacetylaminobenzol-sulfonsäure genannt. Statt dieser konnen selbstverständlich, entsprechend der Definition für den Rest D in Formel (1), andere Komponenten eingesetzt werden, z. B. anders substituierte Diaminobenzole, wie 1,4-Diaminobenzol oder 1,3-Diamino-4-chlorbenzol, oder Diamino-naphthaline, wie 2,6-Diaminonaphthalin usw.

Im folgenden sollen mögliche Ausgangsstoffe, die zur Herstellung der Reaktivfarbstoffe der Formel (1) verwendet werden können, einzeln genannt werden.

## Diazokomponenten

1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z. B. 1-Acetylamino-3-aminobenzol-4-sulfonsäure oder 1-Acetylamino-4-aminobenzol-3-sulfonsäure.

Falls die beiden Reste -N($R_1$)-$X_1$ und -N($R_2$)-$X_2$ in Formel (1) an die gleiche Komponente, z. B. die Kupplungskomponente, gebunden sind, wie dies weiter vor beschrieben ist, können als Diazokomponenten auch solche verwendet werden, die neben der zu diazotierenden Aminogruppe keine acylierbare Aminogruppe enthalten, wie z. B. Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4'-disulfonsäure, 3-Methoxy-4-amino-6-methylazobenzol-2',4'-disulfonsäure oder 3-Methoxy-4-amino-6-methylazobenzol-2',5'-disulfonsäure.

**Kupplungskomponenten**

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Äthylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Äthylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol.

**Reaktivkomponenten**

2,4,6-Trifluor-1,3,5-triazin (Cyanurfluorid) bzw. die primären Kondensationsprodukte von 2,4,6-Trifluor-1,3,5-triazin mit den unten genannten Aminen.

**Amine**

Ammoniak, Methylamin, Dimethylamin, Äthylamin, Diäthylamin, Propylamin, Isopropylamin, Butylamin, Dibutylamin, Isobutylamin, sek.-Butylamin, tert.-Butylamin, Hexylamin, Methoxyäthylamin, Äthoxyäthylamin, Methoxypropylamin, Chloräthylamin, Hydroxyäthylamin, Dihydroxyäthylamin, Hydroxypropylamin,

Aminoäthansulfonsäure, β-Sulfatoäthylamin, Benzylamin, Phenäthylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Äthylanilin, 3- und 4-Acetylaminoanilin, 2,5-Dimethoxyanilin, o-, m- und p-Anisidin, o-, m- und p-Phenetidin, 2-Methoxy-5-methylanilin, 2-Äthoxy-5-methoxyanilin, 4-Bromanilin, 3-Aminobenzamid, 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5; -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin und Piperazin.

Die Diazotierung der Diazokomponenten der Formel (45) bzw. der eine diazotierbare Aminogruppe enthaltenden Zwischenprodukte erfolgt in der Regel durch Einwirkung salpetriger Säure in wässrigmineralsauer Lösung bei tiefer Temperatur. Die Kupplung auf die Kupplungskomponente erfolgt bei schwach sauren, neutralen bis schwach alkalischen pH-Werten.

Die Kondensationen des 2,4,6-Trifluor-1,3,5-triazins mit den Diazokomponenten der Formel (45) und den Kupplungskomponenten der Formel (46) und mit den Aminen bzw. mit acylierbaren Monoazo- oder Disazo-Zwischenprodukten erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Fluorwasserstoff laufend durch Zugabe wässriger Alkalihydroxyde, -carbonate oder -bicarbonate neutralisiert. Als Alkaliverbindungen kommen z. B. Natriumhydroxy, Kaliumhydroxyd, Natriumcarbonat oder Natriumhydrogencarbonat, oder auch basische Lithiumverbindungen, wie Lithiumcarbonat, Lithiumhydrogencarbonat oder Lithiumhydroxyd, in Betracht. Gegebenenfalls verwendet man basische Lithiumverbindungen auch bei Kupplungen bei neutralen bis alkalischen pH-Werten.

Die Disazofarbstoffe der Formel (1) sind faserreaktiv, da sie an jedem der beiden s-Triazinringe ein abspaltbares Fluoratom gebunden enthalten. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d. h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Aus der GB-A-1 263 083 sind Monoazofarbstoffe mit je zwei Chlortriazinresten bekannt; diese weisen nicht alle guten Applikationseigenschaften der erfindungsgemässen Farbstoffe auf.

Die nachfolgenden Beispiele dienen zur Erläuterung der Erfindung. Die Temperaturen sind in Celsiusgraden

angegeben. Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

**Beispiel 1:**

a) 43,7 Teile 2-Amino-6-(3'-amino-6'-sulfophenylazo)-5-hydroxynaphthalin-7-sulfonsäure der Formel

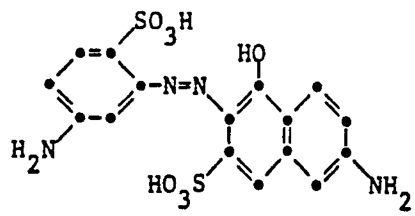

(hergestellt durch Kupplung von diazotierter 1-Amino-3-acetylaminobenzol-2-sulfonsäure auf 2-Acetylamino-5-hydroxynaphthalin-7-sulfonsäure bei pH 5 und anschliessende alkalische Hydrolyse)

werden in 1200 ml Wasser neutral gelöst und die Lösung auf 10° C abgekühlt.

Nach Zusatz einer neutralen Mischung von 57,6 Teilen 2,4-Difluor-6-(2'-sulfophenylamino)-1,3,5-triazin und 600 ml Wasser wird die Temperatur innert 2 bis 3 Stunden auf 20 bis 25°C erhöht und dabei der pH der Reaktionsmischung durch ständige Zugabe von 2n Natriumhydroxydlösung bei 7,0 gehalten. Nach vollständiger Reaktion wird der gebildete Reaktivfarbstoff der Formel

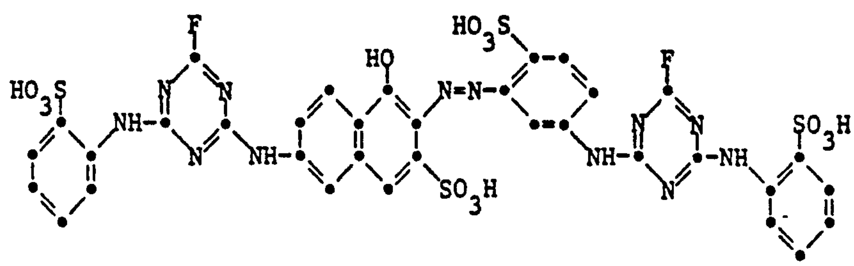

durch Eindampfen der Reaktionslösung bei pH 7 isoliert. Er färbt Baumwolle in orangen Tönen.

b) 23,9 Teile 2-Amino-5-hydroxynaphthalin-7-sulfonsäure werden in 800 ml Wasser neutralgelöst und die Lösung auf 10°C abgekühlt. Nach Zusatz einer Mischung von 28,8 Teilen 2,4-Difluor-6-(2'-sulfophenylamino)-1,3,5-triazin und 300 ml Wasser wird die Temperatur auf 20 bis 25°C erhöht und dabei der pH der Reaktionsmischung durch ständige Zugabe von 2n Natriumhydroxydlösung bei 5 bis 6 gehalten. Nach vollständiger Reaktion wird bei 0 bis 5°C eine Mischung von 45,6 Teilen diazotiertem 2-(3'-Amino-4'-sulfophenylamino)-4-fluor-6-(2''-sulfophenylamino)-1,3,5-triazin mit 300 Teilen Wasser zugegeben. Nach vollständiger Kupplungsreaktiön bei pH 6 bis 7 wird der gleiche Reaktivfarbstoff wie unter Beispiel 1a erwähnt durch Aussalzen isoliert. Er färbt Baumwolle in orangen Tönen.

**Beispiel 2:**

a) 43,7 Teile 2-Amino-6-(4'-amino-6'-sulfophenylazo)-5-hydroxynaphthalin-7-sulfonsäure der Formel

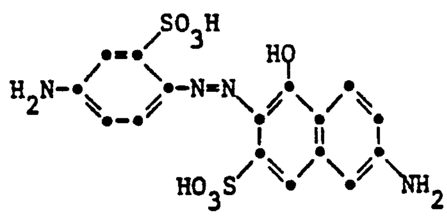

(hergestellt durch Kupplung von diazotierter 1-Amino-4-acetylaminobenzol-2-sulfonsäure auf 2-Acetylamino-5-hydroxynaphthalin-7-sulfonsäure bei pH 5 und anschliessende alkalische Hydrolyse)

werden in 1200 ml Wasser neutral gelöst und die Lösung auf 10° C abgekühlt.

Nach Zusatz einer neutralen Mischung von 57,6 Teilen 2,4-Difluor-6-(2'-sulfophenylamino)-1,3,5-triazin und 600 ml Wasser wird die Temperatur innert 2 bis 3 Stunden auf 20 bis 25° C erhöht und dabei der pH der Reaktionsmischung durch ständige Zugabe von 2n Natriumhydroxydlösung bei 7,0 gehalten. Nach vollständiger Reaktion wird der gebildete Reaktivfarbstoff der Formel

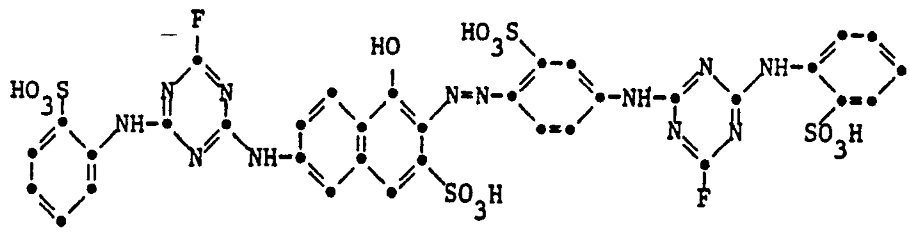

durch Eindampfen der Reaktionslösung bei pH 7 isoliert. Er färbt Baumwolle in gelbstichig roten Tönen.

b) 23,9 Teile 2-Amino-5-hydroxynaphthalin-7-sulfonsäure werden in 800 ml Wasser neutralgelöst und die Lösung auf 10° C abgekühlt. Nach Zusatz einer Mischung von 28,8 Teilen 2,4-Difluor-6-(2'-sulfophenylamino)-1,3,5-triazin und 300 ml Wasser wird die Temperatur auf 20 bis 25° C erhöht und dabei der pH der Reaktionsmischung durch ständige Zugabe von 2n Natriumhydroxydlösung bei 5 bis 6 gehalten. Nach vollständiger Reaktion wird bei 0 bis 5° C eine Mischung von 45,6 Teilen diazotiertem 2-(4'-Amino-3'-sulfophenylamino)-4-fluor-6-(2''-sulfophenylamino)-1,3,5-triazin mit 300 Teilen Wasser zugegeben. Nach vollständiger Kupplungsreaktion bei pH 6 bis 7 wird der gleiche Reaktivfarbstoff wie unter Beispiel 2a erwähnt durch Aussalzen isoliert. Er färbt Baumwolle in gelbstichig roten Tönen.

**Beispiel 3:**

23,9 Teile 2-Amino-5-hydroxynaphthalin-7-sulfonsäure werden in 800 ml Wasser neutral gelöst und die Lösung auf 10° C abgekühlt. Nach Zusatz einer Mischung von 28,8 Teilen 2,4-Difluor-6-(2'-sulfophenylamino)-1,3,5-triazin und 300 ml Wasser wird die Temperatur auf 20 bis 25° C erhöht und dabei der pH der Reaktionsmischung durch ständige Zugabe von 2n Natriumhydroxydlösung bei 5 bis 6 gehalten. Nach vollständiger Reaktion wird bei 0 bis 5° C eine Mischung von 45,6 Teilen diazotiertem 2-(4'-Amino-2',5'-disulfophenylamino)-4-fluor-6-(N-äthyl-N-phenylamino)-1,3,5-triazin mit 300 Teilen Wasser zugegeben.

Nach vollständiger Kupplungsreaktion bei pH 6 bis 7 wird der Reaktivfarbstoff der Formel

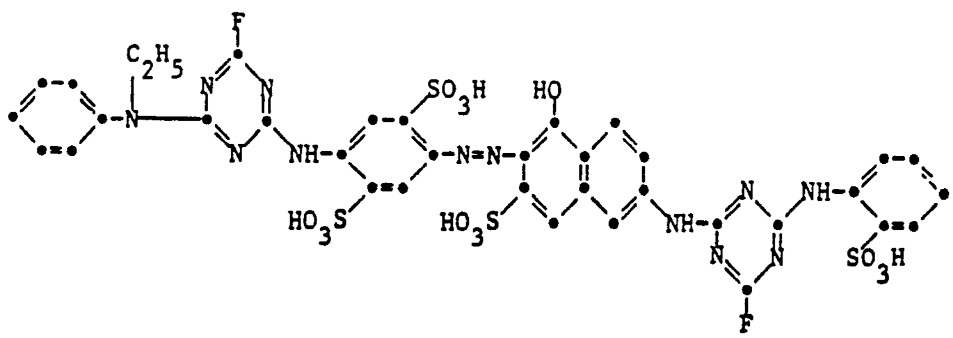

durch Eindampfen der Reaktionslösung bei pH 7 isoliert. Er färbt Baumwolle in roten Tönen.

**Beispiel 4:**

a) 43,7 Teile 2-Amino-7-(3'-amino-6'-sulfophenylazo)-8-hydroxynaphthalin-6-sulfonsäure der Formel

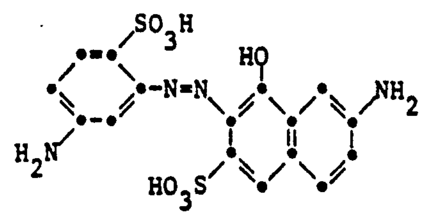

(hergestellt durch Kupplung von diazotierter 1-Amino-3-acetylaminobenzol-2-sulfonsäure auf 2-Acetylamino-8-hydroxynaphthalin-6-sulfonsäure bei pH 5 und anschliessende alkalische Hydrolyse),

werden in 1200 ml Wasser neutral gelöst und die Lösung auf 10°C abgekühlt.

Nach Zusatz einer neutralen Mischung von 57,6 Teilen 2,4-Difluor-6-(2'-sulfophenylamino)-1,3,5-triazin und 600 ml Wasser wird die Temperatur innert 2 bis 3 Stunden auf 20 bis 25°C erhöht und dabei der pH der Reaktionsmischung durch ständige Zugabe von 2n Natriumhydroxydlösung bei 7,0 gehalten. Nach vollständiger Reaktion wird der gebildete Reaktivfarbstoff der Formel

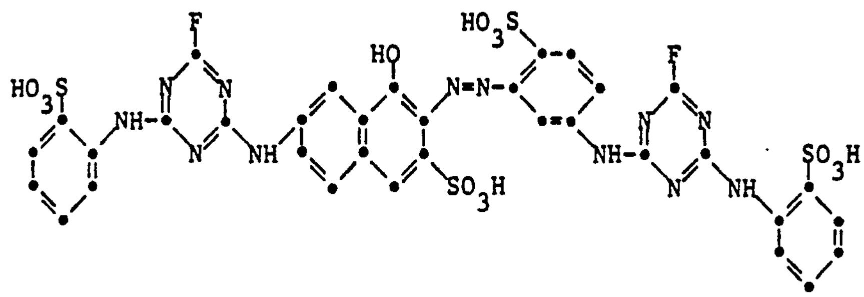

durch Eindampfen der Reaktionslösung bei pH 7 isoliert. Er färbt Baumwolle in Scharlach-Tönen.

b) 23,9 Teile 2-Amino-8-hydroxynaphthalin-6-sulfonsäure werden in 800 ml Wasser neutral gelöst und die Lösung auf 10°C abgekühlt. Nach Zusatz einer Mischung von 28,8 Teilen 2,4-Difluor-6-(2'-sulfophenylamino)-1,3,5-triazin und 300 ml Wasser wird die Temperatur auf 20 bis 25°C erhöht und dabei der pH der Reaktionsmischung durch ständige Zugabe von 2n Natriumhydroxydlösung bei 5 bis 6 gehalten. Nach vollständiger Reaktion wird bei 0 bis 5°C eine Mischung von 45,6 Teilen diazotiertem 2-(3'-Amino-4'-sulfophenylamino)-4-fluor-6-(2''-sulfophenylamino)-1,3,5-triazin mit 300 Teilen Wasser zugegeben. Nach vollständiger Kupplungsreaktion bei pH 6 bis 7 wird der gleiche Reaktivfarbstoff wie unter Beispiel 4a erwähnt durch Aussalzen isoliert. Er färbt Baumwolle in Scharlach-Tönen.

**Beispiel 5:**

43,7 Teile 2-Amino-7-(4'-amino-6'-sulfophenylazo)-8-hydroxynaphthalin-6-sulfonsäure der Formel

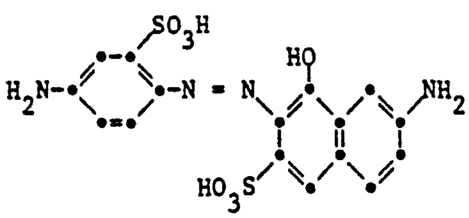

(hergestellt durch Kupplung von diazotierter 1-Amino-4-acetylaminobenzol-2-sulfonsäure auf 2-Acetylamino-8-hydroxynaphthalin-6-sulfonsäure bei pH 5 und anschliessende alkalische Hydrolyse), werden in 1400 ml Wasser neutral gelöst und die Lösung auf 0°C abgekühlt. Bei dieser Temperatur werden 28 Teile 2,4,6-Trifluor-1,3,5-triazin innert 20 Minuten zugetropft, wobei der pH der Reaktionslösung durch gleichzeitige Zugabe von 2n Natriumhydroxydlösung bei 6 bis 7 gehalten wird. Nach vollständiger Reaktion werden 34,6 Teile 1-Aminobenzol-3-sulfonsäure in 300 ml Wasser neutral gelöst zugegeben, wobei der pH der Reaktionslösung durch gleichzeitige Zugabe von 2n Natriumhydroxydlösung bei 6 bis 7 gehalten und die Temperatur innert 2 bis 3 Stunden auf 20° bis 25°C erhöht wird. Nach vollständiger Reaktion wird der gebildete Reaktivfarbstoff der Formel

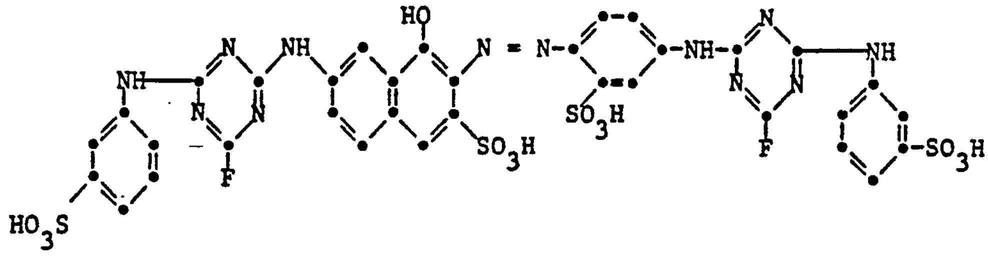

durch Eindampfen der Reaktionslösung bei pH 7 isoliert. Er färbt Baumwolle in Rubin-Tönen.

Nach den in den Beispielen 1 bis 5 beschriebenen Verfahren können weitere wertvolle Reaktivfarbstoffe der Formel

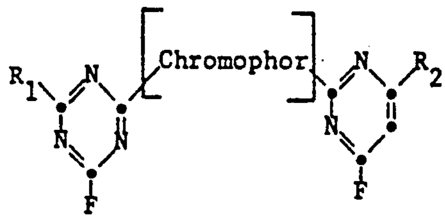

hergestellt werden, worin $R_1$, $R_2$ und Chromophor die in der folgenden Tabelle 1 angegebenen Bedeutungen haben.

Tabelle I

| Beispiele | $R_1$ | $R_2$ | Chromophor | Farbton auf Baumwolle |
|---|---|---|---|---|
| 6 | 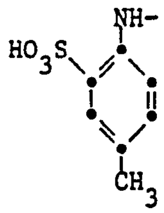 | 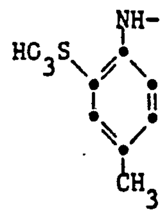 | 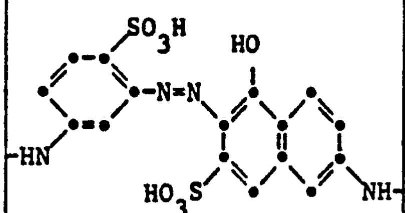 | orange |
| 7 | 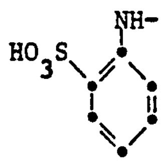 | 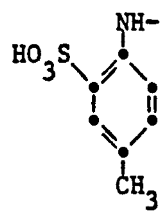 | do. | do. |
| 8 | 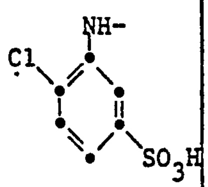 | 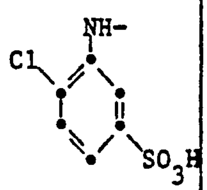 | do. | do. |
| 9 | 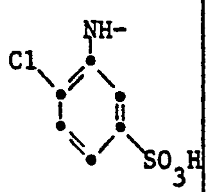 | 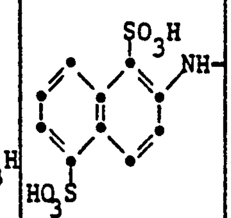 | do. | do. |
| 10 | 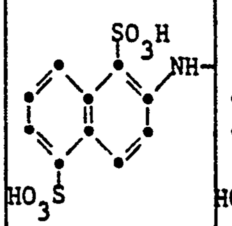 | 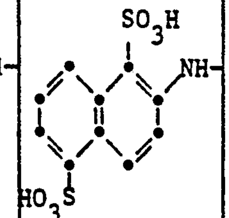 | do. | do. |

Tabelle I (Fortsetzung)

| Beispiele | $R_1$ | $R_2$ | Chromophor | Farbton auf Baumwolle |
|---|---|---|---|---|
| 11 | 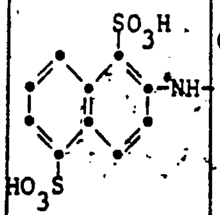 | 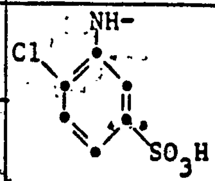 | 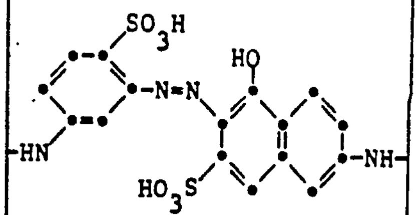 | orange |
| 12 | 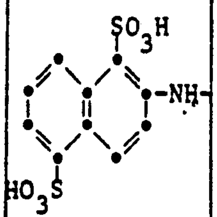 | 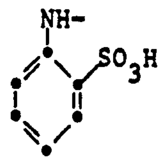 | do. | do. |
| 13 | 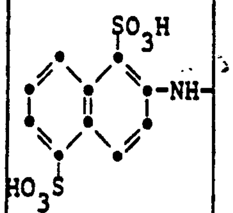 | 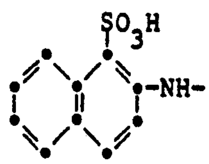 | do. | do. |
| 14 | 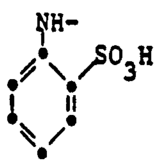 | 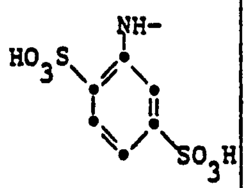 | do. | do. |
| 15 | 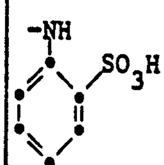 | 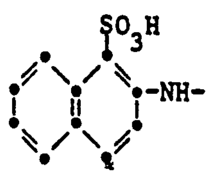 | do. | do. |
| 16 | 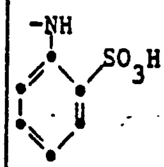 | 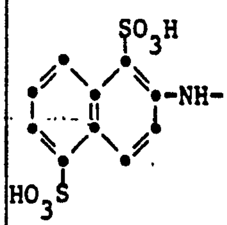 | do. | do. |

Tabelle I (Fortsetzung)

| Beispiele | $R_1$– | $R_2$ | Chromophor | Farbton auf Baumwolle |
|---|---|---|---|---|
| 17 | 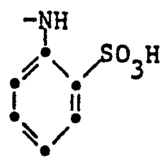 | 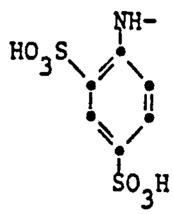 | 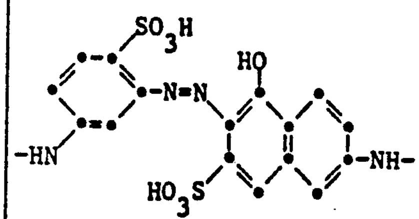 | orange |
| 18 | 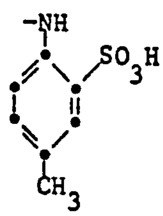 | 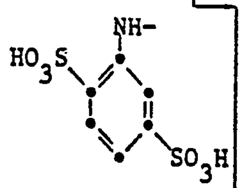 | do. | do. |
| 19 | 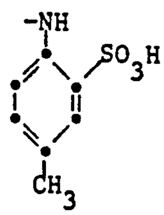 | 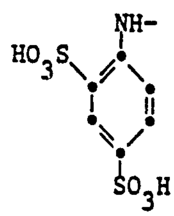 | do. | do. |
| 20 | 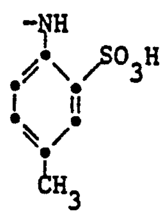 | 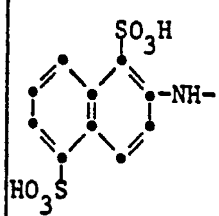 | do. | do. |
| 21 | 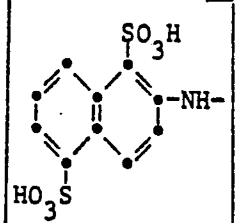 | 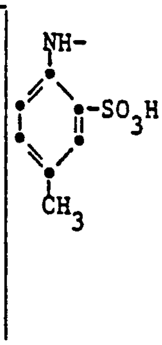 | do. | do. |

Tabelle I (Fortsetzung)

| Beispiele | $R_1$ | $R_2$ | Chromophor | Farbton auf Baumwolle |
|---|---|---|---|---|
| 22 | 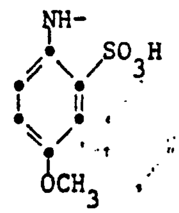 | 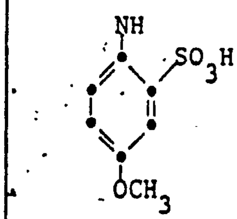 | 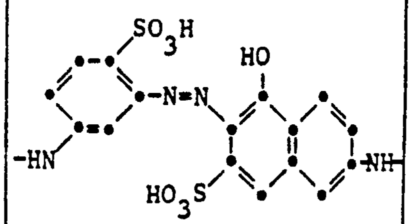 | orange |
| 23 | 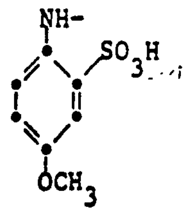 | 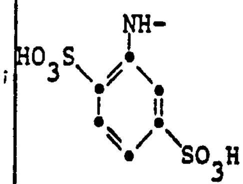 | do. | do. |
| 24 | 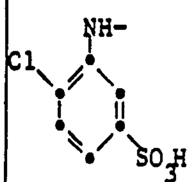 | 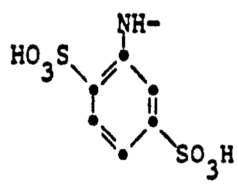 | do. | do. |
| 25 | 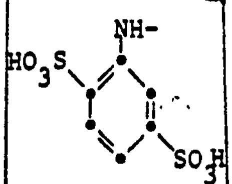 | 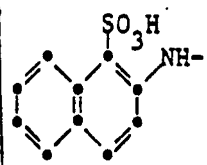 | do. | do. |
| 26 | 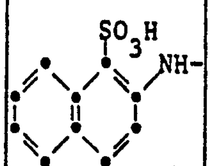 | 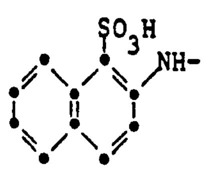 | do. | do. |
| 27 | 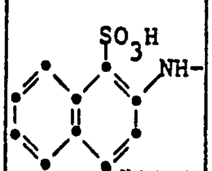 | 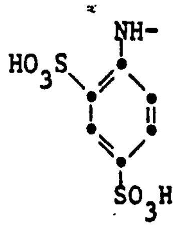 | do. | do. |

Tabelle I (Fortsetzung)

| Beispiele | $R_1$ | $R_2$ | Chromophor | Farbton auf Baumwolle |
|---|---|---|---|---|
| 28 | 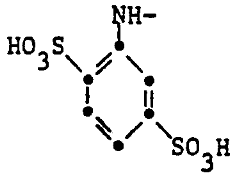 | 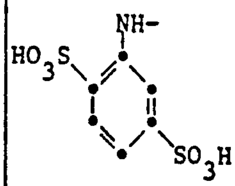 | 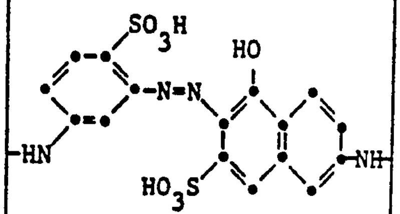 | orange |
| 29 | 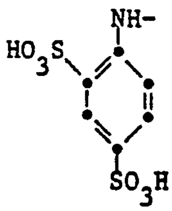 | 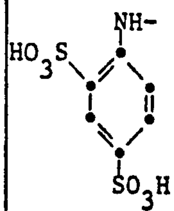 | do. | do. |
| 30 | 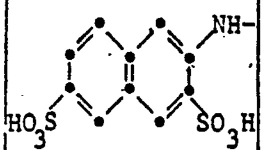 | 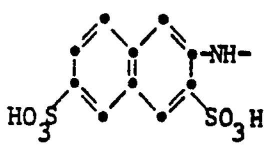 | do. | do. |
| 31 | 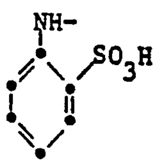 | 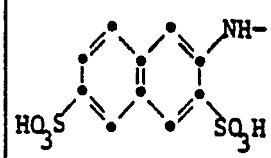 | do. | do. |
| 32 | 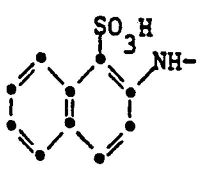 | 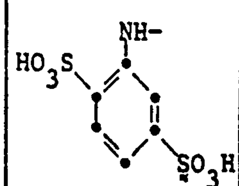 | do. | do. |
| 33 | 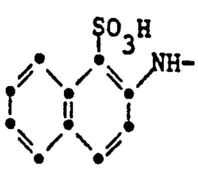 | 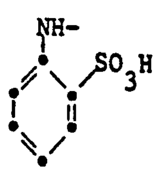 | do. | do. |

Tabell I (Fortsetzung)

| Beispiele | $R_1$ | $R_2$ | Chromophor | Farbton auf Baumwolle |
|---|---|---|---|---|
| 34 | 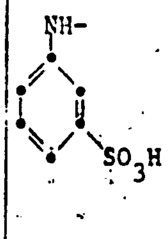 | 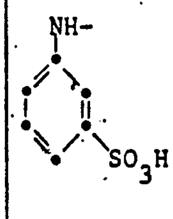 | 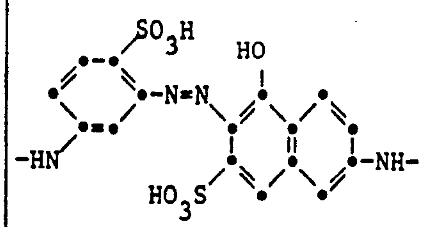 | orange |
| 35 | 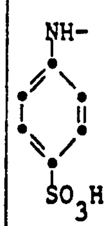 | 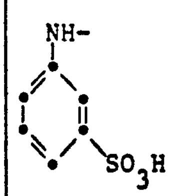 | do. | do. |
| 36 | 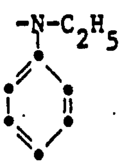 | 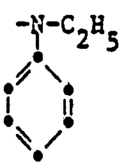 | do. | do. |
| 37 | 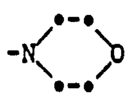 | 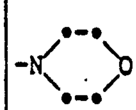 | do. | do. |
| 38 | $-NHCH_2CH_2OH$ | $-NHCH_2CH_2OH$ | do. | do. |
| 39 | $-NHCH_2CH_2SO_3H$ | $-NHCH_2CH_2SO_3H$ | do. | do. |
| 40 | 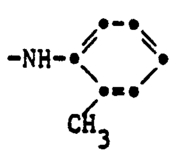 | 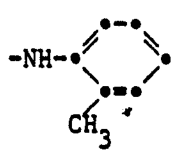 | do. | do. |

Tabelle I (Fortsetzung)

| Beispiele | $\underline{R_1}$ | $R_2$ | Chromophor | Farbton auf Baumwolle |
|---|---|---|---|---|
| 41 | 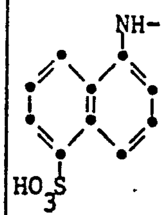 | 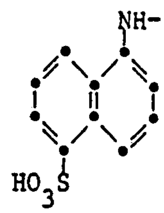 | 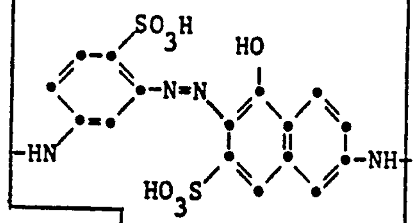 | orange |
| 42 | 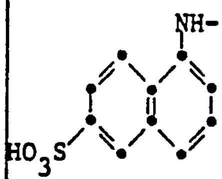 | 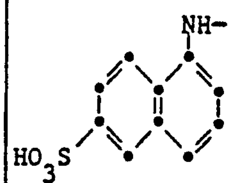 | do. | do. |
| 43 | 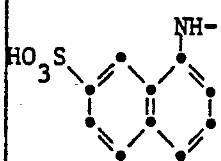 | 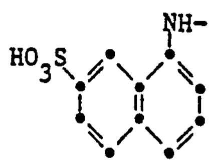 | do. | do. |
| 44 | 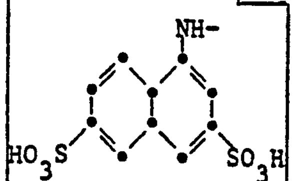 | 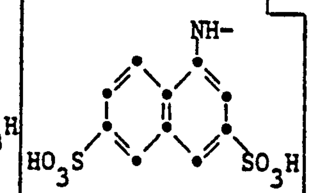 | do. | do. |
| 45 | 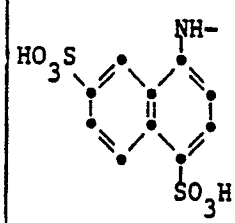 | 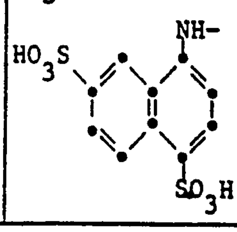 | do. | do. |

Tabelle I (Fortsetzung)

| Beispiele | $R_1$ | $R_2$ | Chromophor | Farbton auf Baumwolle |
|---|---|---|---|---|
| 46 | 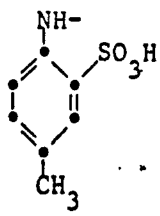 | 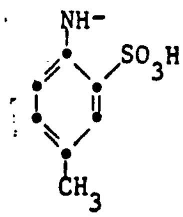 | 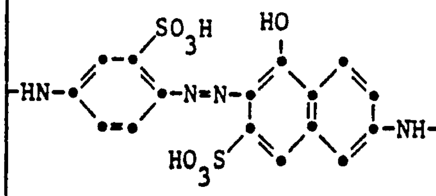 | gelbstichig rot |
| 47 | 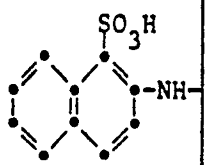 | 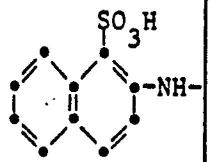 | do. | do. |
| 48 | 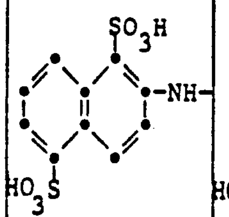 | 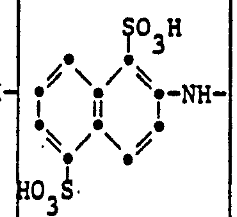 | do. | do. |
| 49 | 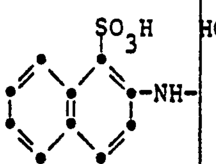 | 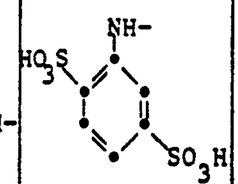 | do. | do. |
| 50 | 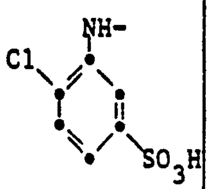 | 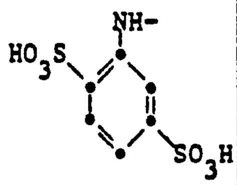 | do. | do. |
| 51 | 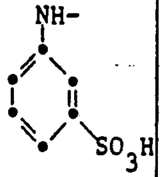 | 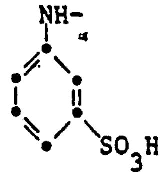 | do. | do. |

Tabelle I (Fortsetzung)

| Beispiele | $R_1$ | $R_2$ | Chromophor | Farbton auf Baumwolle |
|---|---|---|---|---|
| 52 | 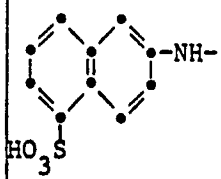 | 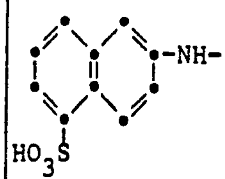 | 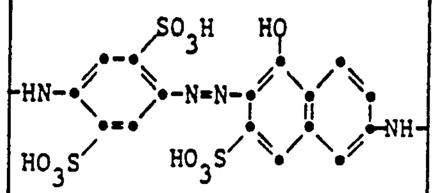 | gelbstichig rot |
| 53 | 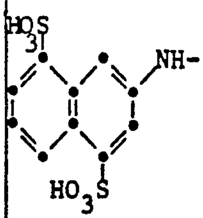 | 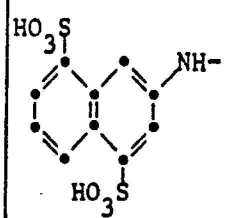 | do. | do. |
| 54 | 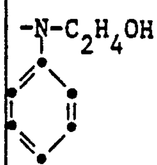 | 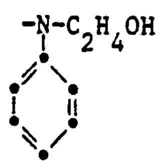 | do. | do. |
| 55 | 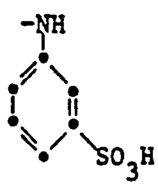 | 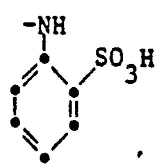 | do. | rot |
| 56 | 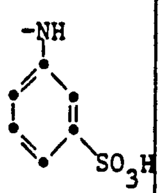 | 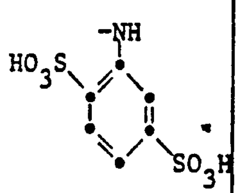 | do. | do. |

Tabelle I (Fortsetzung)

| Beispiele | $R_1$ | $R_2$ | Chromophor | Farbton auf Baumwolle |
|---|---|---|---|---|
| 57 | 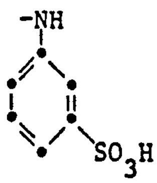 | 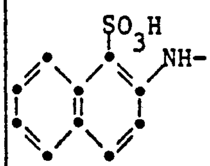 | 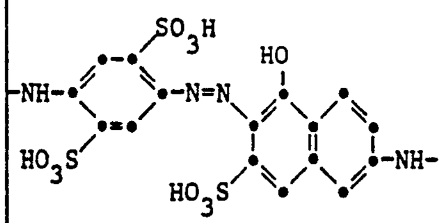 | rot |
| 58 | 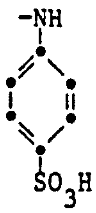 | 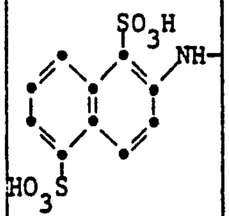 | do. | do. |
| 59 | 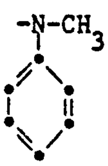 | 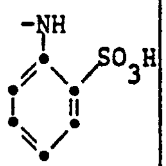 | do. | do. |
| 60 | 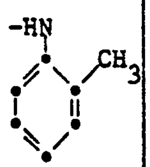 | 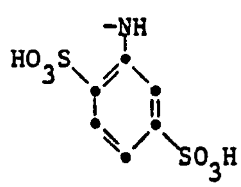 | do. | do. |
| 61 | 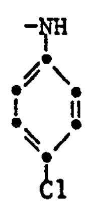 | 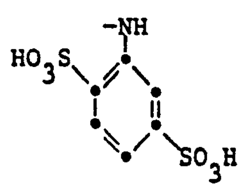 | do. | do. |
| 62 | 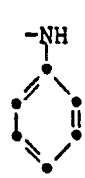 | 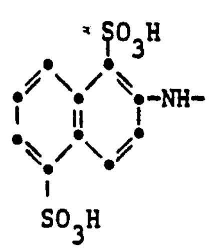 | do. | do. |

Tabelle I (Fortsetzung)

| Beispiele | $R_1$ | $R_2$ | Chromophor | Farbton auf Baumwolle |
|---|---|---|---|---|
| 63 | 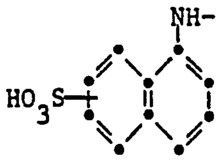 | 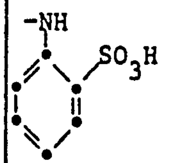 | 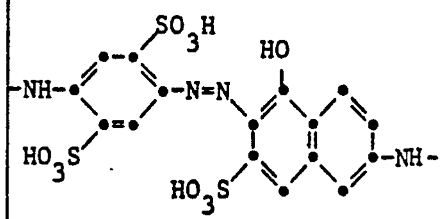 | rot |
| 64 | $-NHCH_2CH_2OH$ | 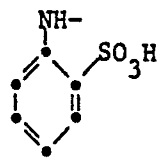 | do. | do. |
| 65 | 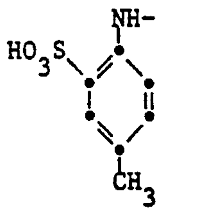 | 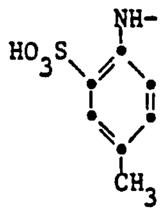 | 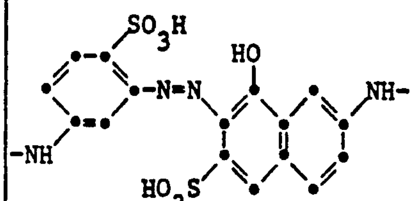 | scharlach |
| 66 | 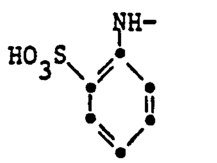 | 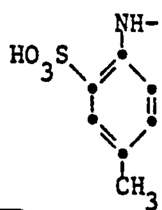 | do. | do. |
| 67 | 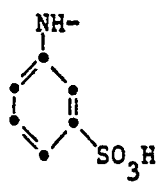 | 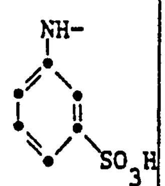 | do. | do. |
| 68 | 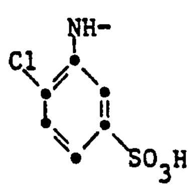 | 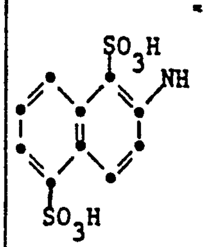 | do. | do. |

Tabelle I (Fortsetzung)

| Beispiele | $R_1$ | $R_2$ | Chromophor | Farbton auf Baumwolle |
|---|---|---|---|---|
| 69 | 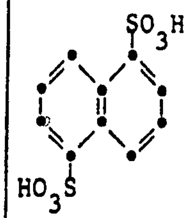 | 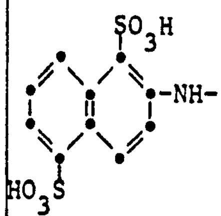 | 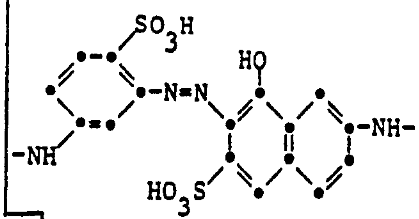 | scharlach |
| 70 | 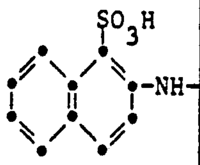 | 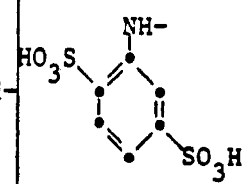 | do. | do. |
| 71 | 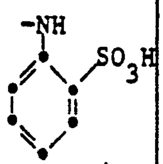 | 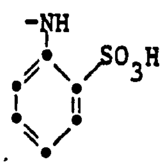 | do. | do. |
| 72 | 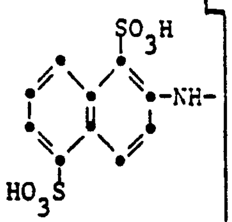 | 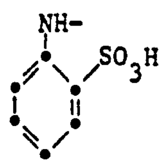 | do. | do. |
| 73 | 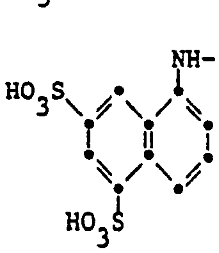 | 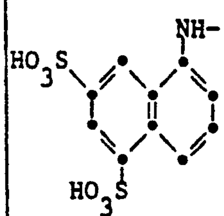 | do. | do. |
| 74 | 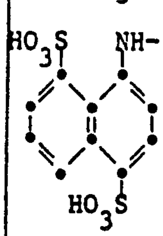 | 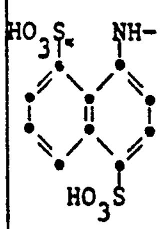 | do. | do. |

Tabelle I (Fortsetzung)

| Beispiele | $R_1$ | $R_2$ | Chromophor | Farbton auf Baumwolle |
|---|---|---|---|---|
| 75 | 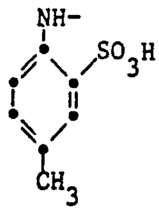 | 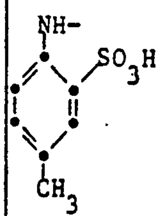 | 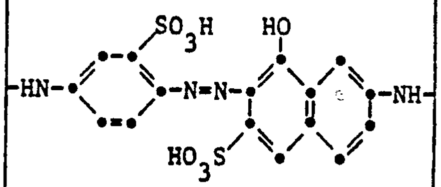 | rubin |
| 76 | 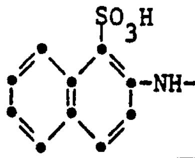 | 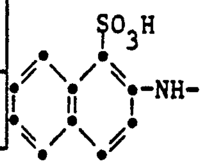 | do. | do. |
| 77 | 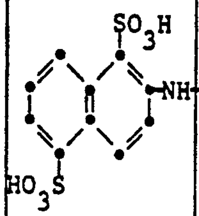 | 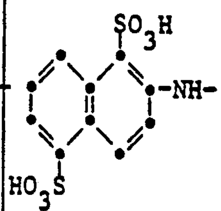 | do. | do. |
| 78 | 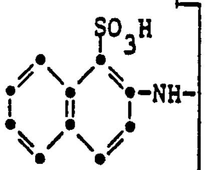 | 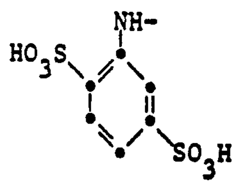 | do. | do. |
| 79 | 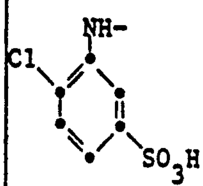 | 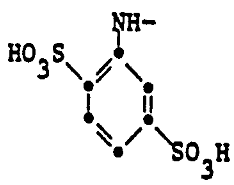 | do. | do. |
| 80 | 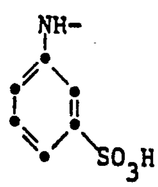 | 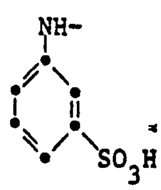 | do. | do. |

Tabelle I (Fortsetzung)

| Beispiele | $R_1$ | $R_2$ | Chromophor | Farbton auf Baumwolle |
|---|---|---|---|---|
| 81 | 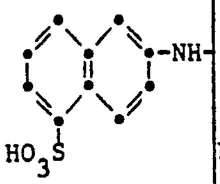 | 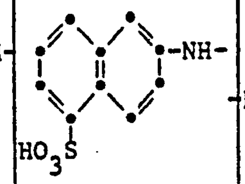 | 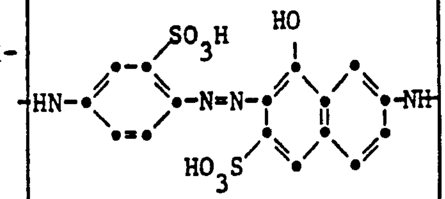 | rubin |
| 82 | 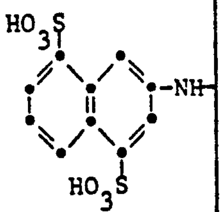 | 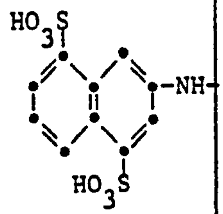 | do. | do. |
| 83 | 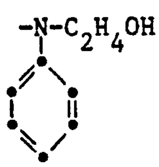 | 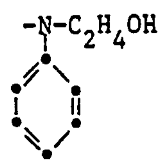 | do. | do. |
| 84 | 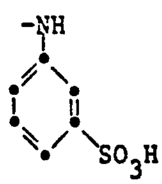 | 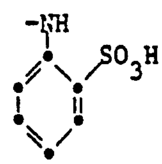 | 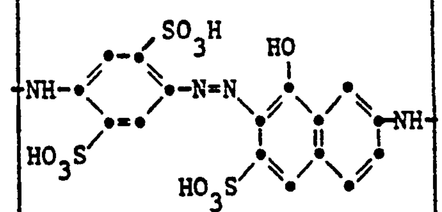 | blaustichig rubin |
| 85 | 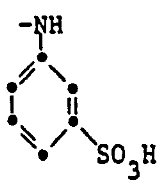 | 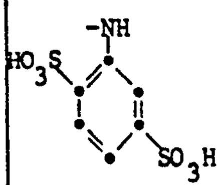 | do. | do. |
| 86 | 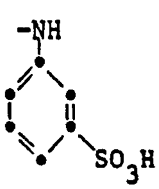 | 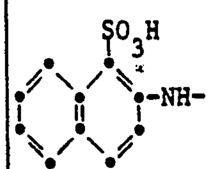 | do. | do. |

Tabelle I (Fortsetzung)

| Beispiele | $R_1$ | $R_2$ | Chromophor | Farbton auf Baumwolle |
|---|---|---|---|---|
| 87 | 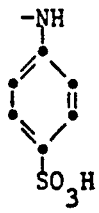 | 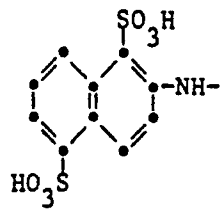 | 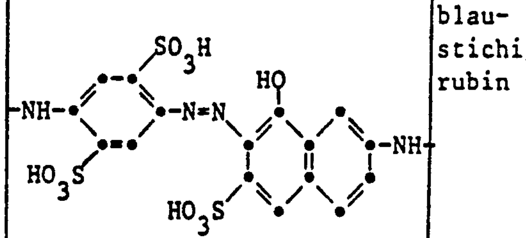 | blaustichig rubin |
| 88 | 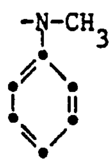 | 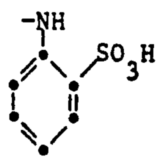 | do. | do. |
| 89 | 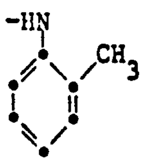 | 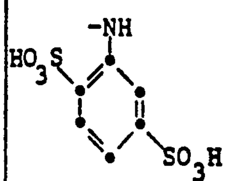 | do. | do. |
| 90 | 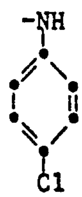 | 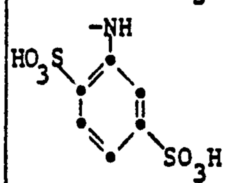 | do. | do. |
| 91 | 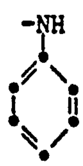 | 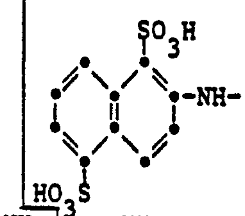 | do. | do. |
| 92 | 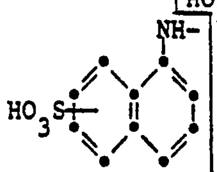 | 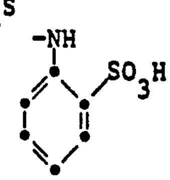 | do. | do. |
| 93 | $-NHCH_2CH_2OH$ | 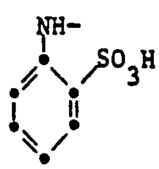 | do. | do. |

Tabelle I (Fortsetzung)

| Beispiele | $R_1$ | $R_2$ | Chromophor | Farbtor auf Baun wolle |
|---|---|---|---|---|
| 94 | $HOCH_2CH_2NH-$ | $HOCH_2CH_2NH-$ | 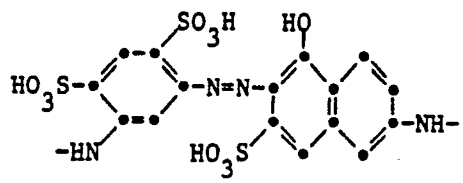 | orange |
| 95 | 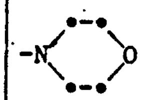 | 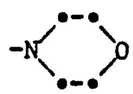 | do. | do. |
| 96 | 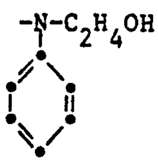 | 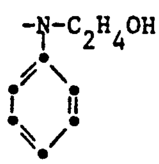 | do. | do. |
| 97 | 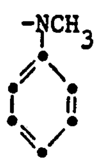 | 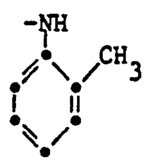 | do. | do. |
| 98 | 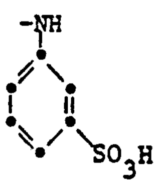 | 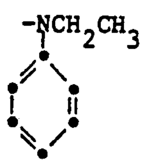 | do. | do. |
| 99 | 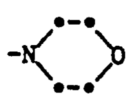 | 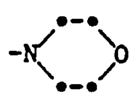 | 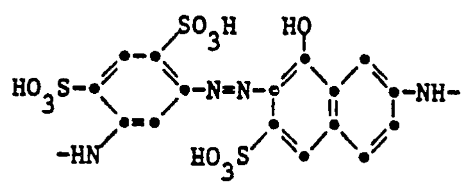 | scharlach |
| 100 | 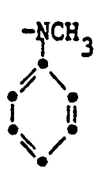 | 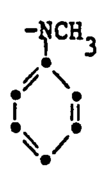 | do. | do. |
| 101 | 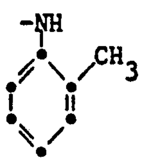 | 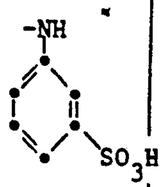 | do. | do. |

Tabelle I (Fortsetzung)

| Beispiele | R1 | R2 | Chromophor | Farbton auf Baumwolle |
|---|---|---|---|---|
| 102 | 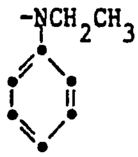 | 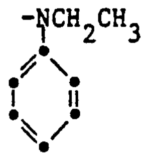 | 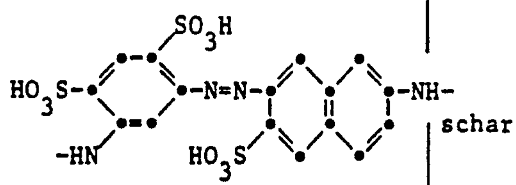 | scharlach |
| 103 | 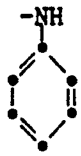 | 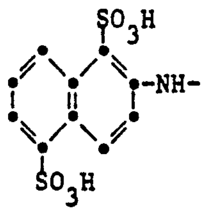 | do. | do. |
| 104 | 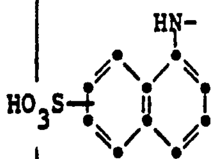 | 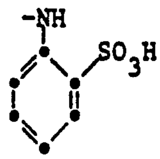 | do. | do. |
| 105 | $-NHCH_2CH_2OH$ | $-NHCH_2CH_2OH$ | do. | do. |

**Beispiel 106:**

31,9 Teile 1-Amino-8-hydroxynaphthalin-3,6-disulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 13,3 Teilen N-Methylamino-2-methylbenzol mit 100 ml Wasser wird der pH der Reaktionsmischung durch ständige Zugabe von 2n Natriumhydroxydlösung zuerst kurze Zeit schwach kongosauer und dann bei 5 - 6 gehalten. Dabei wird die Temperatur innert 2 bis 3 Stunden auf 20° bis 25°C erhöht. Nach vollständiger Reaktion wird dieses Zwischenprodukt bei 0° bis 10°C und pH 5 mit 45,6 Teilen diazotiertem 2-(3'-Amino-4'-sulfophenylamino)-4-fluor-6-(2''-sulfophenylamino)-1,3,5-triazin gekuppelt. Nach vollständiger Kupplungsreaktion bei pH 7 wird die Reaktionsmischung geklärt und der gebildete Reaktivfarbstoff der Formel

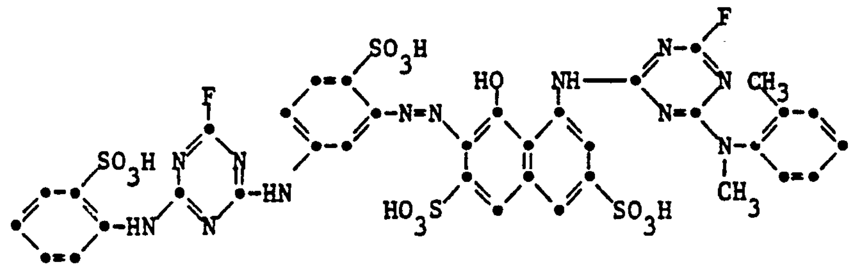

durch Eindampfen oder Gefriertrocknen der Reaktionslösung bei pH 7 isoliert. Er färbt Baumwolle in roten Tönen.

**Beispiel 107**

31,9 Teile 1-Amino-8-hydroxynaphthalin-3,6-disulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 12 Teilen N-Methyl-aminobenzol mit 100 ml Wasser wird der pH der Reaktionsmischung durch ständige Zugabe von 2n Natriumhydroxydlösung zuerst kurze Zeit schwach kongosauer und dann bei 5 - 6 gehalten. Dabei wird die Temperatur innert 2 bis 3 Stunden auf 20° bis 25°C erhöht. Nach vollständiger Reaktion wird dieses Zwischenprodukt bei 0° bis 10°C und pH 5 mit 45,6 Teilen diazotiertem 2-(3'-Amino-4'-sulfophenylamino)-4-fluor-6-(2''-sulfophenylamino)-1,3,5-triazin gekuppelt. Nach vollständiger Kupplungsreaktion bei pH 7 wird die Reaktionsmischung geklärt und der gebildete Reaktivfarbstoff der Formel

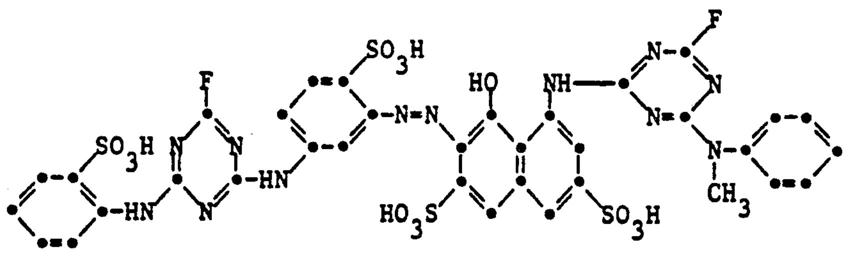

durch Eindampfen oder Gefriertrocknen der Reaktionslösung bei pH 7 isoliert. Er färbt Baumwolle in roten Tönen.

**Beispiel 108**

31,9 Teile 1-Amino-8-hydroxynaphthalin-3,6-disulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 14,3 Teilen N-Äthylamino-2-methylbenzol mit 100 ml Wasser wird der pH der Reaktionsmischung durch ständige Zugabe von 2n Natriumhydroxydlösung zuerst kurze Zeit schwach kongosauer und dann bei 5 - 6 gehalten. Dabei wird die Temperatur innert 2 bis 3 Stunden auf 20° bis 25°C erhöht. Nach vollständiger

Reaktion wird dieses Zwischenprodukt bei 0° bis 10°C und pH 5 mit 45,6 Teilen diazotiertem 2-(3'-Amino-4'-sulfophenylamino)-4-fluor-6-(2''-sulfophenylamino)-1,3,5-triazin gekuppelt. Nach vollständiger Kupplungsreaktion bei pH 7 wird die Reaktionsmischung geklärt und der gebildete Reaktivfarbstoff der Formel

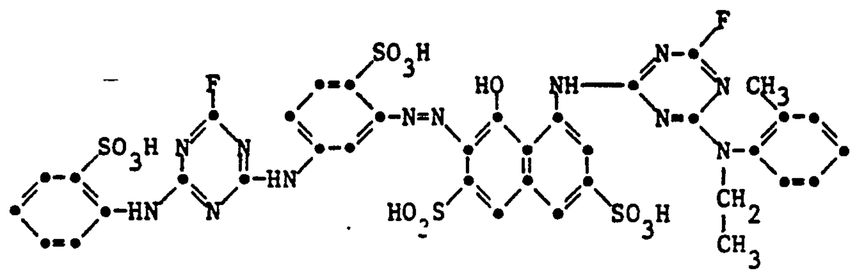

durch Eindampfen oder Getriertrocknen der Reaktionslösung bei pH 7 isoliert. Er färbt Baumwolle in roten Tönen.

**Beispiel 109**

31,9 Teile 1-Amino-8-hydroxynaphthalin-3,6-disulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 14,3 Teilen N-Äthylamino-3-methylbenzol mit 100 ml Wasser wird der pH der Reaktionsmischung durch ständige Zugabe von 2n Natriumhydroxydlösung zuerst kurze Zeit schwach kongosauer und dann bei 5 - 6 gehalten. Dabei wird die Temperatur innert 2 bis 3 Stunden auf 20° bis 25°C erhöht. Nach vollständiger Reaktion wird dieses Zwischenprodukt bei 0° bis 10°C und pH 5 mit 45,6 Teilen diazotiertem 2-(3'-Amino-4'-sulfophenylamino)-4-fluor-6-(2''-sulfophenylamino)-1,3,5-triazin gekuppelt. Nach vollständiger Kupplungsreaktion bei pH 7 wird die Reaktionsmischung geklärt und der gebildete Reaktivarbstoff der Formel

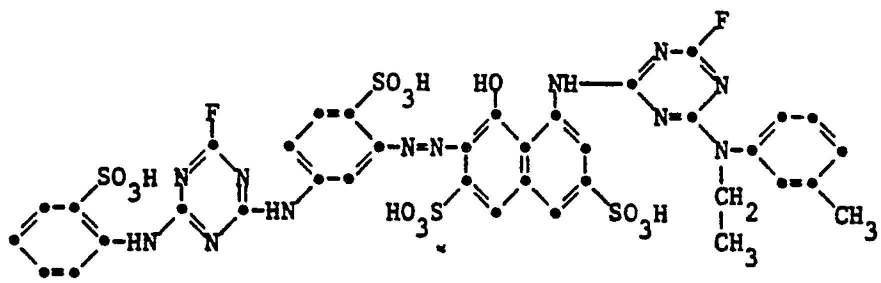

durch Eindampfen oder Gefriertrocknen der Reaktionslösung bei pH 7 isoliert. Er färbt Baumwolle in roten Tönen.

**Beispiel 110:**

31,9 Teile 1-Amino-8-hydroxynaphthalin-3,6-disulfonsäure werden in 800 ml Wasser neutral gelöst und die Lösung auf 0° bis 5°C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 13,3 Teilen N-Äthyl-aminobenzol mit 100 ml Wasser wird der pH der Reaktionsmischung durch ständige Zugabe von 2n Natriumhydroxydlösung zuerst kurze Zeit schwach kongosauer und dann bei 5 - 6 gehalten. Dabei wird die Temperatur innert 2 bis 3 Stunden auf 20° bis 25°C erhöht. Nach vollständiger Reaktion wird dieses Zwischenprodukt bei 0° bis 10°C und pH 5 mit 45,6 Teilen diazotiertem 2-(3'-Amino-4'-sulfophenylamino)-4-fluor-6-(2''-sulfophenylamino)-1,3,5-triazin gekuppelt. Nach vollständiger Kupplungsreaktion bei pH 7 wird die Reaktionsmischung geklärt und der gebildete Reaktivfarbstoff der Formel

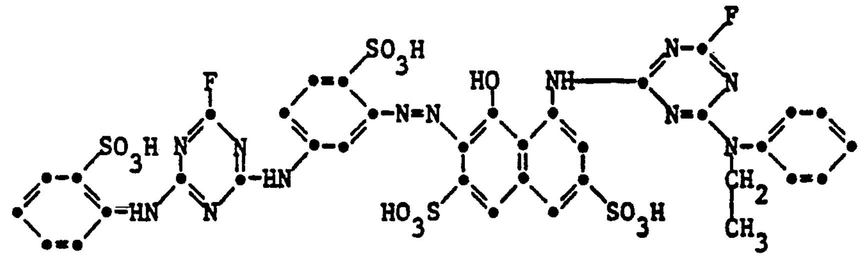

durch Eindampfen oder Gefriertrocknen der Reaktionslösung bei pH 7 isoliert. Er färbt Baumwolle in roten Tönen.

Weitere wertvolle Reaktivfarbstoffe, die Baumwolle in den in Tabelle II, Spalte 5 angegebenen Farbtönen färben, werden erhalten, wenn man gemäss den Angaben in Beispiel 110 die in Spalte 2 angegebene Kupplungskomponente zuerst mit 2,4,6-Trifluor-1,3,5-triazin und dann mit der in Spalte 3 angegebenen Aminoverbindung umsetzt und auf das so erhaltene Zwischenprodukt die in Spalte 4 angegebene diazotierte Diazokomponente kuppelt.

**Tabelle II**

| Bsp. | Kupplungskomponente | Aminoverbindung | Diazokomponente | Farbton auf Baumwolle |
|---|---|---|---|---|
| 111 | 1-Amino-8-hydroxy-naphthalin-3,6-disulfonsäure | N-Äthyl-aminobenzol | 2-(3'-Amino-4'-sulfophenylamino)--4-fluor-6-(1''-sulfonaphth-2''-ylamino)-1,3,5-triazin | rot |
| 112 | 1-Amino-8-hydroxy-naphthalin-3,6-disulfonsäure | N-Methyl-aminobenzol | 2-(3'-Amino-4'-sulfophenylamino)--4-fluor-6-(1''-sulfonaphth-2''-ylamino)-1,3,5-triazin | rot |
| 113 | 1-Amino-8-hydroxy-naphthalin-3,6-disulfonsäure | 1-Amino-2-methylbenzol | 2-(3'-Amino-4'-sulfophenylamino)--4-fluor-6-(1''-sulfonaphth-2''-ylamino)-1,3,5-triazin | rot |
| 114 | 1-Amino-8-hydroxy-naphthalin-3,6-disulfonsäure | β-Hydroxy-äthylamin | 2-(3'-Amino-4'-sulfophenylamino)--4-fluor-6-(1''-sulfonaphth-2''-ylamino)-1,3-5-triazin | rot |
| 115 | 1-Amino-8-hydroxy-naphthalin-3,6-disulfonsäure | 1-Aminobenzol-3-sulfonsäure | 2-(3'-Amino-4'-sulfophenylamino)--4-fluor-6-(1''-sulfonaphth-2''-ylamino)-1,3,5-triazin | rot |
| 116 | 1-Amino-8-hydroxy-naphthalin-3,6-disulfonsäure | β-Sulfo-äthylamin | 2-(3'-Amino-4'-sulfophenylamino)--4-fluor-6-(1''-sulfonaphth-2''-ylamino)-1,3,5-triazin | rot |
| 117 | 1-Amino-8-hydroxy-naphthalin-3,6-disulfonsäure | 4-Chlor-aminobenzol | 2-(3'-Amino-4'-sulfophenylamino)--4-fluor-6-(1''-sulfonaphth-2''-ylamino)-1,3,5-triazin | rot |
| 118 | 1-Amino-8-hydroxy-naphthalin-3,6-disulfonsäure | Aminobenzol | 2-(3'-Amino-4'-sulfophenylamino)--4-fluor-6-(1''-sulfonaphth-2''-ylamino)-1,3,5-triazin | rot |
| 119 | 1-Amino-8-hydroxy-naphthalin-3,6-disulfonsäure | Morpholin | 2-(3'-Amino-4'-sulfophenylamino)--4-fluor-6-(1''-sulfonaphth-2''-ylamino)-1,3,5-triazin | rot |
| 120 | 1-Amino-8-hydroxy-naphthalin-3,6-disulfonsäure | 1-Amino-3-methyl-benzol | 2-(3'-Amino-4'-sulfophenylamino)--4-fluor-6-(1''-sulfonaphth-2''-ylamino)-1,3,5-triazin | rot |
| 121 | 1-Amino-8-hydroxy-naphthalin-3,6-disulfonsäure | N-(2-Hydroxyäthyl)-aminobenzol | 2-(3'-Amino-4'-sulfophenylamino)--4-fluor-6-(1''-sulfonaphth-2''-ylamino)-1,3,5-triazin | rot |
| 122 | 1-Amino-8-hydroxy-naphthalin-3,6-disulfonsäure | 3-Chlor-aminobenzol | 2-(3'-Amino-4'-sulfophenylamino)--4-fluor-6-(1''-sulfonaphth-2''-ylamino)-1,3,5-triazin | rot |
| 123 | 1-Amino-8-hydroxy-naphthalin-3,6-disulfonsäure | N-Äthylaminobenzol | 2-(3'-Amino-4'-sulfophenylamino)-4-fluor-6-(1'',5''-disulfonaphth-2''-ylamino)-1,3,5-triazin | rot |
| 124 | 1-Amino-8-hydroxy-naphthalin-3,6- | 1-Amino-3-methyl-benzol | 2-(3'-Amino-4'-sulfophenylamino)-4-fluor-6-(1'',5''-disulfonaphth-2''- | rot |

| | | | | |
|---|---|---|---|---|
| | disulfonsäure | | ylamino)-1,3,5-triazin | |
| 125 | 1-Amino-8-hydroxy-naphthalin-3,6-disulfonsäure | 1-Amino-4-methylbenzol | 2-(3'-Amino-4'-sulfophenylamino)-4-fluor-6-(1'',5''-disulfonaphth-2''-ylamino)-1,3,5-triazin | rot |
| 126 | 1-Amino-8-hydroxy-naphthalin-3,6-disulfonsäure | N-Methylaminobenzol | 2-(3'-Amino-4'-sulfophenylamino)-4-fluor-6-(2'',5''-disulfophenyl-amino)-1,3,5-triazin | rot |
| 127 | 1-Amino-8-hydroxy-naphthalin-3,6-disulfonsäure | 4-Chlor-aminobenzol | 2-(3'-Amino-4'-sulfophenylamino)-4-fluor-6-(2'',5''-disulfophenyl-amino)-1,3,5-triazin | rot |
| 128 | 1-Amino-8-hydroxy-naphthalin-3,6-disulfonsäure | 3-Chlor-aminobenzol | 2-(3'-Amino-4'-sulfophenylamino)-4-fluor-6-(2'',5''-disulfophenyl-amino)-1,3,5-triazin | rot |
| 129 | 1-Amino-8-hydroxy-naphthalin-3,6-disulfonsäure | 1-Amino-4-äthylanilin | 2-(3'-Amino-4'-sulfophenylamino)-4-fluor-6-(2'',4''-disulfophenyl-amino)-1,3,5-triazin | rot |
| 130 | 1-Amino-8-hydroxy-naphthalin-3,6-disulfonsäure | 4-Chlor-aminobenzol | 2-(3'-Amino-4'-sulfophenylamino)-4-fluor-6-(2'',4''-disulfophenyl-amino)-1,3,5-triazin | rot |
| 131 | 1-Amino-8-hydroxy-naphthalin-3-6-disulfonsäure | Aminobenzol | 2-(3'-Amino-4'-sulfophenylamino)-4-fluor-6-(2'',4''-disulfophenyl-amino)-1,3-5-triazin | rot |
| 132 | 1-Amino-8-hydroxy-naphthalin-3,6-disulfonsäure | N-Äthylaminobenzol | 2-(3'-Amino-4'-sulfophenylamino)-4-fluor-6-(2''-chlor-5''-sulfophenylamino)-1,3,5-triazin | rot |
| 133 | 1-Amino-8-hydroxy-naphthalin-3,6-disulfonsäure | N-Methylaminobenzol | 2-(3'-Amino-4'-sulfophenylamino)-4-fluor-6-(2''-sulfophenylamino)-1,3,5-triazin | rot |
| 134 | 1-Amino-8-hydroxy-naphthalin-3,6-disulfonsäure | 1-Amino-2-methylbenzol | 2-(3'-Amino-4'-sulfophenylamino)-4-fluor-6-(2''-sulfophenylamino)-1,3,5-triazin | rot |
| 135 | 1-Amino-8-hydroxy-naphthalin-3,6-disulfonsäure | 1-Amino-4-methoxy-benzol | 2-(3'-Amino-4'-sulfophenylamino)-4-fluor-6-(2''-sulfophenylamino)-1,3,5-triazin | rot |
| 136 | 1-Amino-8-hydroxy-naphthalin-3,6-disulfonsäure | 1-Amino-4-äthylbenzol | 2-(3'-Amino-4'-sulfophenylamino)-4-fluor-6-(2''-sulfophenylamino)-1,3,5-triazin | rot |
| 137 | 1-Amino-8-hydroxy-naphthalin-3,6-disulfonsäure | N-Propyl-aminobenzol | 2-(3'-Amino-4'-sulfophenylamino)-4-fluor-6-(2''-sulfophenylamino)-1,3,5-triazin | rot |
| 138 | 1-Amino-8-hydroxy-naphthalin-3,6-disulfonsäure | N-Butylaminobenzol | 2-(3'-Amino-4'-sulfophenylamino)-4-fluor-6-(2''-sulfophenylamino)-1,3,5-triazin | rot |
| 139 | 1-Amino-8-hydroxy-naphthalin-3,6-disulfonsäure | 1-Amino-3-methylbenzol | 2-(3'-Amino-4'-sulfophenylamino)-4-fluor-6-(2''-sulfophenylamino)-1,3,5-triazin | rot |
| 140 | 1-Amino-8-hydroxy-naphthalin-3,6-disulfonsäure | 1-Amino-4-methylbenzol | 2-(3'-Amino-4'-sulfophenylamino)-4-fluor-6-(2''-sulfophenylamino)-1,3,5-triazin | rot |
| 141 | 1-Amino-8-hydroxy-naphthalin-3,6-disulfonsäure | Morpholin | 2-(3'-Amino-4'-sulfophenylamino)-4-fluor-6-(2''-sulfophenylamino)-1,3,5-triazin | rot |
| 142 | 1-Amino-8-hydroxy-naphthalin-3,6-disulfonsäure | 4-Chlor-aminobenzol | 2-(3'-Amino-4'-sulfophenylamino)-4-fluor-6-(2''-sulfophenylamino)-1,3,5-triazin | rot |
| 143 | 1-Amino-8-hydroxy-naphthalin-3,6-disulfonsäure | 3-Chlor-aminobenzol | 2-(3'-Amino-4'-sulfophenylamino)-4-fluor-6-(2''-sulfophenylamino)-1,3,5-triazin | rot |
| 144 | 1-Amino-8-hydroxy-naphthalin-3,6-disulfonsäure | N-(2-Hydroxyäthyl)-aminobenzol | 2-(3'-Amino-4'-sulfophenylamino)-4-fluor-6-(2''-sulfophenylamino)-1,3,5-triazin | rot |
| 145 | 1-Amino-8-hydroxy-naphthalin-3,6-disulfonsäure | Aminobenzol | 2-(3'-Amino-4'-sulfophenylamino)-4-fluor-6-(2''-sulfophenylamino)-1,3,5-triazin | rot |

| | | | | |
|---|---|---|---|---|
| 146 | 1-Amino-8-hydroxy-naphthalin-4,6-disulfonsäure | N-Äthylaminobenzol | 2-(3'-Amino-4'-sulfophenylamino)-4-fluor-6-(2''-sulfophenylamino)-1,3,5-triazin | gelbstichig rot |
| 147 | 1-Amino-8-hydroxy naphthalin-4,6-disulfonsäure | 1-Amino-2-methylbenzol | 2-(3'-Amino-4'-sulfophenyl-amino)-4-fluor-6-(1''-sulfo-naphth-2''-ylamino)-1,3,5-triazin | gelbstichig rot |
| 148 | 1-Amino-8-hydroxy-naphthalin-4,6-disulfonsäure | 4-Chlor-aminobenzol | 2-(3'-Amino-4'-sulfophenyl amino)-4-fluor-6-(1'',5''-disulfonaphth-2''-ylamino)-1,3,5-triazin | gelbstichig rot |
| 149 | 1-Amino-8-hydroxy-naphthalin-4,6-disulfonsäure | 1-Amino-4-acetamino-benzol | 2-(3'-Amino-4'-sulfophenylamino)-4-fluor-6-(2'',5''-disulfophenylamino)-1,3,5-triazin | gelbstichig rot |
| 150 | 1-Amino-8-hydroxy-naphthalin-4,6-disulfonsäure | 3-Chloraminobenzol | 2-(3'-Amino-4'-sulfophenylamino)-4-fluor-6-(2'',4'' disulfophenylamino)-1,3,5-triazin | gelbstichig rot |
| 151 | 1-Amino-8-hydroxy-naphthalin-4,6-disulfonsäure | N-Methylanilin | 2-(3'-Amino-4'-sulfophenylamino)-4-fluor-6-(2''-chlor-5''-sulfophenylamino)-1,3,5-triazin | gelbstichig rot |
| 152 | 1-Amino-8-hydroxy-naphthalin-4,6-disulfonsäure | Aminobenzol | 2-(3'-Amino-4'-sulfophenyl-amino)-4-fluor-6-(3'',6''-di-sulfonaphth-2''-ylamino)-1,3,5-triazin | gelbstichig rot |
| 153 | 1-Amino-8-hydroxy-naphthalin-4,6-disulfonsäure | 1-Amino-3-acet-aminobenzol | 2-(3'-Amino-4'-sulfophenyl-amino)-4-fluor-6-(3'',6''-di-sulfonaphth-2''ylamino)-1,3,5-triazin | gelbstichig rot |
| 154 | 1-Amino-8-hydroxy-naphthalin-4,6-disulfonsäure | 1-Amino-4-methyl benzol-2-sulfon-säure | 2-(3'-Amino-4'-sulfophenyl-amino)-4-fluor-6-(3'',6''-di-sulfonaphth-2''-ylamino)-1,3-5-triazin | gelbstichig rot |

**Tabelle II** (Fortsetzung)

| Bsp. | Kupplungs-komponente | Aminoverbindung | Diazokomponente | Farbton auf Baumwolle |
|---|---|---|---|---|
| 155 | 1-Amino-8-hydroxy-naphthalin-4,6-di-sulfonsäure | 4-Chloramino-benzol | 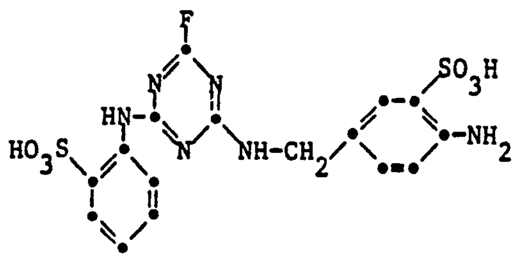 | blaustichig rot |
| 156 | 1-Amino-8-hydroxy-naphthalin-4,6-di-sulfonsäure | 4-Chloramino-benzol | 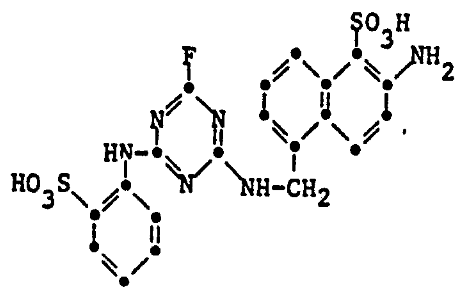 | blaustichig rot |

| | | | | |
|---|---|---|---|---|
| 157 | 1-Amino-8-hydroxy-naphthalin-4,6-di sulfonsäure | Aminobenzol | 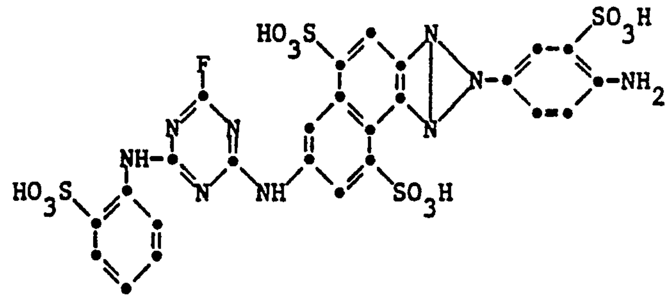 | blaustichig rot |
| 158 | 1-Amino-8-hydroxy-naphthalin-4,6-di-sulfonsäure | Aminobenzol | 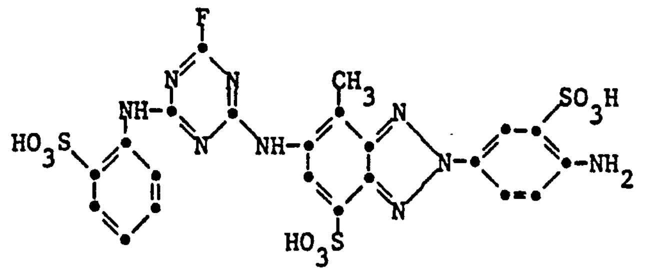 | blaustichig rot |
| 159 | do. | Monoäthanolamin | 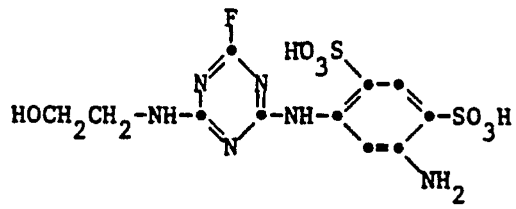 | blaustichig rot |
| 160 | do. | Morpholin | 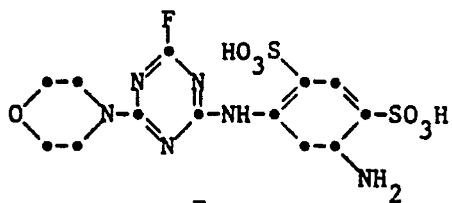 | do. |
| 161 | do. | N-Äthylamino-benzol | 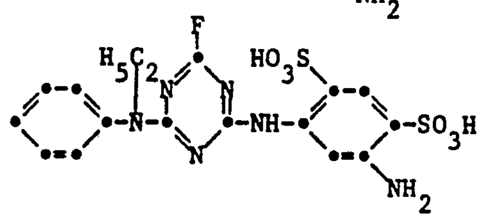 | do. |
| 162 | do. | N-Methylamino-benzol | do. | do. |
| 163 | do. | 1-Aminobenzol-3-sulfonsäure | do. | do. |
| 164 | do. | Monoäthanolamin | do. | do. |
| 165 | do. | Monoäthanolamin | 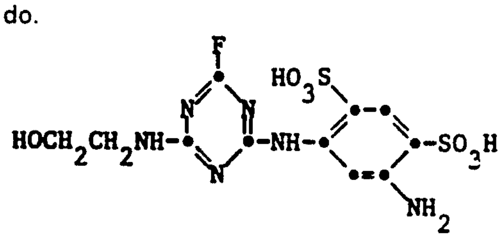 | do. |

**Beispiel 166:**

Zu einer neutralen Lösung von 3,46 Teilen Anilin-2-sulfonsäure in 100 ml Wasser werden bei ca. 0° unter intensivem Rühren rasch 2,0 Teile Cyanurfluorid in 5 Teilen Toluol zugetropft. Der pH-Wert wird durch gleichzeitiges Eintropfen von 2N NaOH bei 6 - 7 gehalten. Nach erfolgter Kondensation werden 5,36 Teile 1,4-Phenylendiamin-2,5-disulfonsäure in fester Form zugegeben und durch Zugabe von 2N NaOH bei 0 - 15° und

einem pH-Wert von 6 - 7 ein zweites Mal kondensiert.

Die erhaltene Lösung wird mit 8 ml HCl konz. und 20 ml 1N Natriumnitrit bei 0 - 5° diazotiert. Dann werden 4,46 Teile 1-Naphthylamin-6-sulfonsäure in fester Form zugegeben und während mehrerer Stunden bei 0 - 15° gekuppelt. Der pH-Wert wird mit 2N NaOH bei 3,5 - 5 gehalten.

Der erhaltene Monoazoreaktivfarbstoff wird mit 5 ml HCl konz. und 20 ml 1N Natriumnitrit bei 0 - 5° diazotiert. 2,14 Teile m-Toluidin werden zugetropft und über Nacht bei 0 - 15° gekuppelt. Der pH-Wert wird mit 2N NaOH bei 3,5 - 5 gehalten. Der teilweise ausgefallene Disazofarbstoff wird mit 2N NaOH neutral gelöst.

Zum Schluss wird durch Zutropfen von 2,0 Teilen Cyanurfluorid in 5 Teilen Toluol bei ca. 0° unter intensivem Rühren reaktiv acyliert und anschliessend durch Zugabe von 3,46 Teilen Anilin-3-sulfonsäure in fester Form ein zweites Mal bei 0 - 15° kondensiert. Der pH-Wert wird in beiden Fällen durch Zugabe von 2N NaOH bei 6 - 7 gehalten. Der fertige Farbstoff wird durch Zugabe von 10 Vol.-% Kochsalz ausgesalzen und abfiltriert. Die mit 1 Teil Dinatriumhydrogenphosphat gepufferte Paste wird bei 40 - 50° getrocknet.

**Beispiel 167:**

5,36 Teile 1,4-Phenylendiamin-2,5-disulfonsäure werden in 100 ml Wasser bei 0° durch Zutropfen von 2,0 Teilen Cyanurfluorid reaktiv acyliert. Der pH-Wert wird mit 2N NaOH bei 6 - 7 gehalten.

Anschliessend werden 3,23 Teile Taurinhydrochlorid, gelöst in 40 ml kaltem Wasser, zugegeben und bei 0° - 10° kondensiert. Der pH-Wert wird durch Zutropfen von 2N NaOH bei 7,5 - 8,5 gehalten.

Nach beendeter Kondensation wird, wie in Beispiel 166 beschrieben, diazotiert und zuerst auf 4,46 Teile 1-Naphthylamin-6-sulfonsäure und nach erneuter Diazotierung auf 2,14 Teile m-Toluidin gekuppelt.

Nach beendeter Kupplung wird, wie in Beispiel 166 beschrieben, mit 1,25 Moläquivalenten eines Kondensats hergestellt aus Anilin-2-sulfonsäure und Cynurfluorid umgesetzt. Der pH-Wert wird durch Zutropfen von 2N NaOH bei 6 - 7 gehalten. Die Temperatur beträgt 0 - 20°. Der fertige Farbstoff wird mit 10 Vol.-% Kochsalz ausgesalzen, mit 1 Teil Natriumdihydrogenphosphat gepuffert und bei 40 - 50° getrocknet.

Die in den Beispielen 166 und 167 beschriebenen Farbstoffe färben Cellulosefasern in gelbstichig braunen Tönen. In der nachfolgenden Tabelle III sind weitere Beispiele aufgeführt. Die Herstellung erfolgt analog den Beispielen 166 und 167. Man erhält wertvolle Farbstoffe, die auf Cellulosefasern gelb- bis blaustichig braune Farbtöne besitzen.

**Tabelle III**

| | 1. Triazin-substituent | Anfangskomponente | Mittelkomponente | End-komponente | 2. Triazin-substituent |
|---|---|---|---|---|---|
| 168 | Anilin-2-sulfonsäure | 1,4-Phenylendiamin-2,5-disulfonsäure | 1-Naphthylamin-6-sulfonsäure | 3-Methyl-anilin | Anilin-2-sulfonsäure |
| 169 | 4-Aminotoluol-3-sulfonsäure | 1,4-Phenylendiamin-2,5-disulfonsäure | 1-Naphthylamin-6-sulfonsäure | 3-Methyl-anilin | 4-Aminotoluol-3-sulfonsäure |
| 170 | Anilin-2,5-disulfonsäure | 1,4-Phenylendiamin-2,5-disulfonsäure | 1-Naphthylamin-6-sulfonsäure | 3-Methyl-anilin | Anilin-2,5-disulfonsäure |
| 171 | Anilin-2,5-disulfonsäure | 1,4-Phenylendiamin 2,5-disulfonsäure | 1-Naphthylamin-6-sulfonsäure | 3-Methyl-anilin | Ammoniak |
| 172 | Anilin-2,5-disulfonsäure | 1,4-Phenylendiamin-2,5-disulfonsäure | 1-Naphthylamin-6-sulfonsäure | 3-Methyl-anilin | o-Toluidin |
| 173 | Anilin-3-sulfonsäure | 1,4-Phenylendiamin-2,5-disulfonsäure | 1-Naphthylamin-6-sulfonsäure | 3-Methyl-anilin | Anilin-2-sulfonsäure |
| 174 | Anilin-2-sulfonsäure | 1,4-Phenylendiamin 2,5-disulfonsäure | 1-Naphthylamin-7-sulfonsäure | 3-Methyl-anilin | Anilin-2-sulfonsäure |
| 175 | Anilin-2-sulfonsäure | 1,4-Phenylendiamin 2,5-disulfonsäure | 1-Naphthylamin-6-sulfonsäure | 2,5-Dimethyl-anilin | Anilin-2-sulfonsäure |
| 176 | Anilin-2-sulfonsäure | 1,4-Phenylendiamin 2,5-disulfonsäure | 1-Naphthylamin-6-sulfonsäure | 5-Methyl-2-methoxyanilin | Anilin-2-sulfonsäure |
| 177 | Anilin-2-sulfonsäure | 1,4-Phenylendiamin-2,5-disulfonsäure | 1-Naphthylamin-6-sulfonsäure | 3-Methoxy-anilin | Anilin-2-sulfonsäure |
| 178 | Anilin-2-sulfonsäure | 1,4-Phenylendiamin-2,5-disulfonsäure | 1-Naphthylamin-6-sulfonsäure | 3-Ureido-anilin | Anilin-2-sulfonsäure |
| 179 | Anilin-2-sulfonsäure | 1,4-Phenylendiamin-2,5-disulfonsäure | 1-Naphthylamin-6-sulfonsäure | 3-Acetyl-aminoanilin | Anilin-2-sulfonsäure |
| 180 | Anilin-2-sulfonsäure | 1,3-Phenylendiamin-4,6-disulfonsäure | 1-Naphthylamin-6-sulfonsäure | 3-Methyl-anilin | Anilin-2-sulfonsäure |
| 181 | Anilin-2-sulfonsäure | 1,3-Phenylendiamin-4,6-disulfonsäure | 1-Naphthylamin-6-sulfonsäure | 3-Methyl-anilin | Anilin-2,5-disulfonsäure |

| | | | | | |
|---|---|---|---|---|---|
| 182 | Anilin-2-sulfonsäure | 1,4-Phenylendiamin-2,5-disulfonsäure | 2,5-Dimethylanilin | 3-Methylanilin | Anilin-2,5-disulfonsäure |

**Beispiel 183:**

5,36 Teile 1,4-Phenylendiamin-2,5-disulfonsäure werden in 100 ml Wasser neutral gelöst. 20 ml 2N Natriumnitrit werden zugegeben. Dann wird durch Zustürzen von 7 ml HCl konz. bei 0 - 5° diazotiert. 4,46 Teile 1-Naphthylamin-6-sulfonsäure werden in fester Form zugegeben und bei 0 - 15° gekuppelt. Der pH-Wert wird durch Eintropfen von 2N NaOH bei 3 - 4 gehalten. Nach beendeter Kupplung wird mit 2N NaOH neutralisiert.

Der erhaltene Monoazofarbstoff wird bei 5 - 20° mit 1,5 Moläquivalenten eines Kondensats aus Anilin-2-sulfonsäure und Cyanurfluorid (s. Beispiel 166) selektiv am Stickstoffatom der Naphthylaminsulfosäure acyliert. Der pH-Wert wird mit 2N NaOH bei 6 - 7 gehalten.

Nach beendeter Acylierung wird durch Zugabe von 20 ml 1N Natriumnitrit und 8 ml HCl konz. bei 0 - 5° diazotiert. 2,14 Teile m-Toluidin werden zugetropft und bei 0 - 15° gekuppelt. Der pH-Wert wird durch Zugabe von 2N NaOH bei 3 - 4 gehalten. Nach beendeter Kupplung wird die Suspension mit 2N NaOH neutral gelöst. Anschliessend wird bei 0 - 20° mit 1,25 Moläquivalenten eines Kondensats aus Anilin-2-sulfonsäure und Cyanurfluorid acyliert. Der pH-Wert wird mit 2N NaOH bei 6 - 7 gehalten. Der fertige Farbstoff wird mit 10 Vol.-% Kochsalz ausgesalzen, mit 1 Teil Dinatriumhydrogenphosphat gepuffert und bei 40 - 50° getrocknet.

Weitere Farbstoffe dieses Typs sind in Tabelle IV aufgeführt. Sie färben Cellulosefasern in gelb- bis rotstichig braunen Tönen. Die Herstellung erfolgt sinngemäss wie in Beispiel 183 beschrieben. Als Triazinsubstituenten kommen auch einfache Amine in Frage, d. h. sowohl das Monoazofarbstoff-Zwischenprodukt als auch der Disazomonoreaktivfarbstoff lassen sich auch direkt an erster Stelle mit Fluortriazin und an 2. Stelle mit einem Amin umsetzen.

**Tabelle IV**

| | 1. Triazinsubstituent | Anfangskomponente | Mittelkomponente | Endkomponente | 2. Triazinsubstituent |
|---|---|---|---|---|---|
| 184 | Anilin-3-sulfonsäure | 1-Naphthylamin-6-sulfonsäure | 1,4-Phenylendiamin-2,5-disulfonsäure | 3-Methylanilin | Anilin-2-sulfonsäure |
| 185 | Anilin-3-sulfonsäure | 1-Naphthylamin-6-sulfonsäure | 1,4-Phenylendiamin-2,5-disulfonsäure | 3-Methylanilin | 4-Aminotoluol-3-sulfonsäure |
| 186 | Anilin-3-sulfonsäure | 1-Naphthylamin-6-sulfonsäure | 1,4-Phenylendiamin-2,5-disulfonsäure | 3-Methylanilin | Anilin-2,5-disulfonsäure |
| 187 | Ammoniak | 1-Naphthylamin-6-sulfonsäure | 1,4-Phenylendiamin-2,5-disulfonsäure | 3-Methylanilin | Anilin-2,5-disulfonsäure |
| 188 | Taurin | 1-Naphthylamin-6-sulfonsäure | 1,4-Phenylendiamin-2,5-disulfonsäure | 3-Methylanilin | Anilin-2-sulfonsäure |
| 189 | Anilin-2-sulfonsäure | 1-Naphthylamin-6-sulfonsäure | 1,4-Phenylendiamin-2,5-disulfonsäure | 3-Methylanilin | Anilin-2,5-disulfonsäure |
| 190 | Anilin-2-sulfonsäure | 1-Naphthylamin-7-sulfonsäure | 1,4-Phenylendiamin-2,5-disulfonsäure | 3-Methylanilin | Anilin-2-sulfonsäure |
| 191 | Taurin | 1-Naphthylamin-6-sulfonsäure | 1,4-Phenylendiamin-2,5-disulfonsäure | 2,5-Dimethylanilin | Anilin-2-sulfonsäure |
| 192 | Taurin | 1-Naphthylamin-6-sulfonsäure | 1,4-Phenylendiamin-2,5-disulfonsäure | 5-Methyl-2-methoxyanilin | Anilin-2-sulfonsäure |
| 193 | Taurin | 1-Naphthylamin-6-sulfonsäure | 1,4-Phenylendiamin-2,5-disulfonsäure | 3-Methoxyanilin | Anilin-2-sulfonsäure |
| 194 | Taurin | 1-Naphthylamin-6-sulfonsäure | 1,4-Phenylendiamin-2,5-disulfonsäure | 3-Ureidoanilin | Anilin-2-sulfonsäure |
| 195 | Taurin | 1-Naphthylamin-6-sulfonsäure | 1,4-Phenylendiamin-2,5-disulfonsäure | 3-Acetylaminoanilin | Anilin-2-sulfonsäure |
| 196 | Anilin-2-sulfonsäure | 1-Naphthylamin-6-sulfonsäure | 1,3-Phenylendiamin-4,6-disulfonsäure | 3-Methylanilin | Anilin-2-sulfonsäure |
| 197 | Anilin-2,5-disulfonsäure | 1-Naphthylamin-6-sulfonsäure | 1,3-Phenylendiamin-4,6-disulfonsäure | 3-Methylanilin | Ammoniak |
| 198 | Anilin-2-sulfonsäure | 3-Methylanilin | 1,4-Phenylendiamin-2,5-disulfonsäure | 3-Methylanilin | Anilin-2,5-disulfonsäure |
| 199 | Anilin-2-sulfonsäure | 3-Ureidoanilin | 1,4-Phenylendiamin-2,5-disulfonsäure | 3-Methylanilin | Anilin-2,5-disulfonsäure |

**Beispiel 200:**

Zu einer Lösung von 3,46 Teilen Anilin-2-sulfonsäure in 100 ml Wasser werden bei 0° unter intensivem Rühren rasch 2,0 Teile Cyanurfluorid in 5 Teilen Toluol zugetropft. Der pH-Wert wird durch gleichzeitiges Eintropfen von 2N NaOH bei 6 - 7 gehalten. Nach erfolgter Kondensation werden 5,36 Teile 1,3-Phenylendiamin-4,6-disulfonsäure in fester Form zugegeben und durch Zugabe von 2N NaOH bei 0 - 15° und einem pH-Wert von 6 - 7 ein zweites Mal kondensiert. Die erhaltene Lösung wird mit 8 ml HCl konz. und 20 ml 1N Natriumnitrit bei 0 - 5° diazotiert und zu einer Suspension von 4,78 Teilen 2-Amino-8-naphthol-6-sulfonsäure in 100 ml Wasser getropft. Der pH-Wert wird mit 2N NaOH bei 4 - 4,5 gehalten. Nach beendeter Kupplung wird mit 5 Vol.-% Kochsalz ausgesalzen, filtriert und bei 40 - 50° getrocknet.

15,72 Teile des vorstehend beschriebenen Monoazoreaktivfarbstoffs werden mit 20 ml 1N Natriumnitrit und 5 ml HCl konz. bei 0° diazotiert. Man gibt 2,14 Teile m-Toluidin zu. Der pH-Wert wird durch Zugabe von 2N NaOH bei 4 - 5 gehalten.

Nach beendeter Kupplung wird mit 1,5 Moläquivalenten eines Kondensats, hergestellt aus Anilin-2-sulfonsäure und Cyanurfluorid reaktiv acyliert. Der pH-Wert wird durch Zutropfen von 2N NaOH bei 6 - 7 gehalten. Der fertige Farbstoff wird mit 5 Vol.-% Kochsalz ausgesalzen und filtriert. Die erhaltene Faste wird mit 1 Teil Dinatriumhydrogenphosphat gepuffert und bei 40 - 50° getrocknet. Man erhält einen Farbstoff, welcher Cellulosefasern in roten Tönen färbt.

In der nachfolgenden Tabelle V sind weitere Farbstoffe aufgeführt, welche nach dem gleichen Prinzip hergestellt werden können. Sie ergeben auf Cellulosefasern rote bis blaustichig rote Färbungen.

**Tabelle V**

| | 1. Triazinsubstituent | Anfangskomponente | Mittelkomponente | Endkomponente | 2. Triazinsubstituent |
|---|---|---|---|---|---|
| 201 | Anilin-2-sulfonsäure | 1,3-Phenylendiamin-4,6-disulfonsäure | 2-Amino-8-naphthol-4,6-disulfonsäure | 3-Methyl-anilin | Anilin-2-sulfonsäure |
| 202 | Anilin-2-sulfonsäure | 1,3-Phenylendiamin-4,6-disulfonsäure | 2-Amino-5-naphthol-7-sulfonsäure | 3-Methyl-anilin | Anilin-2-sulfonsäure |
| 203 | Anilin-2-sulfonsäure | 1,4-Phenylendiamin-2,5-disulfonsäure | 2-Amino-8-naphthol-6-sulfonsäure | 3-Methyl-anilin | Anilin-2-sulfonsäure |
| 204 | Anilin-2-sulfonsäure | 1,4-Phenylendiamin-2,5-disulfonsäure | 2-Amino-8-naphthol-4,6-disulfonsäure | 3-Methyl-anilin | Anilin-2-sulfonsäure |
| 205 | Anilin-2-sulfonsäure | 1,4-Phenylendiamin-2,5-disulfonsäure | 2-Amino-5-naphthol-7-sulfonsäure | 3-Methyl-anilin | Anilin-2-sulfonsäure |
| 206 | Anilin-2-sulfonsäure | 2-Amino-5-amino-methylnaphthalin-1,7-disulfonsäure | 2-Amino-8-naphthol-6-sulfonsäure | 3-Methyl-anilin | Anilin-2-sulfonsäure |
| 207 | Anilin-2-sulfonsäure | 2-Amino-6-nitro-naphthalin-4,8-disulfonsäure (zuerst gekuppelt und reduziert) | 1-Naphthylamin-6-sulfonsäure | 3-Methyl-anilin | Anilin-3-sulfonsäure |

**Beispiel 208:**

6,64 Teile 5-Aminomethyl-2-naphthylamin-1,7-disulfonsäure werden nach den Angaben von Beispiel 166 mit einem Kondensat aus 2,0 Teilen Cyanurfluorid und 3,46 Teilen Anilin-2-sulfonsäure umgesetzt, anschliessend diazotiert und auf 4,46 Teile 1-Naphthylamin-6-sulfonsäure gekuppelt. Der erhaltene Monoazofarbstoff wird erneut diazotiert und auf 2,14 Teile 3-Methylanilin gekuppelt. Schliesslich wird mit einem Kondensat aus Cyanurfluorid und Anilin-2,5-disulfonsäure reaktiv acyliert und wie in Beispiel 166 aufgearbeitet. Man erhält einen Farbstoff, der Cellulosefasern in rotstichig braunen Tönen färbt.

Ein ähnlicher Farbstoff wird erhalten, wenn statt 1-Naphthylamin-6-sulfonsäure 2,42 Teile 2,5-Dimethylanilin eingesetzt werden.

**Beispiel 209:**

5,36 Teile 1,4-Phenylendiamin-2,5-disulfonsäure werden nach den Angaben in Beispiel 166 mit 2,0 Teilen Cyanurfluorid und 3,46 Teilen Anilin-2-sulfonsäure reaktiv acyliert und anschliessend diazotiert. Dann werden 3,02 Teile 3-Aminophenylharnstoff in 25 ml Wasser durch intensives Rühren homogenisiert, und die Suspension in die vorstehende Reaktionslösung gegeben. Man kuppelt bei einer Temperatur von 0 - 15° und hält den pH-Wert durch Zugabe von 2N NaOH bei 3 - 4. Nach beendeter Kupplung wird mit 2N NaOH neutralisiert, wobei sich alles löst.

Dann wird, wie in Beispiel 167 beschrieben, mit 1,25 Moläquivalenten eines Kondensats aus Anilin-2-sulfonsäure und Cyanurfluorid reaktiv acyliert. Der z. T. ausgefallene Farbstoff wird mit 10 Vol.-% Kochsalz ausgesalzen, filtriert, mit 1 Teil Natriumdihydrogenphosphat gepuffert und bei 40 - 50° getrocknet. Er färbt Cellulosefasern in goldgelben bis orangen Tönen.

In der nachfolgenden Tabelle VI sind weitere Beispiele aufgeführt. Ihre Herstellung ergibt sich aus dem bisher Gesagten. Sie färben Baumwolle in gelben bis orangen Tönen.

**Tabelle VI**

| | 1. Triazinsubstituent | Diazokomponente | Kupplungskomponente | 2. Triazinsubstituent |
|---|---|---|---|---|
| 210 | Anilin-2-sulfonsäure | 1,4-Phenylendiamin-2,5-disulfonsäure | 3-Methylanilin | Anilin-2-sulfonsäure |
| 211 | Anilin-2,5-disulfonsäure | 1,4-Phenylendiamin-2,5-disulfonsäure | 1-Ureidoanilin | Ammoniak |
| 212 | Anilin-2,5-disulfonsäure | 1,4-Phenylendiamin-2,5-disulfonsäure | do. | o-Toluidin |
| 213 | do. | 1,4-Phenylendiamin-2,5-disulfonsäure | do. | Semicarbazid |
| 214 | Anilin-2-sulfonsäure | 1,4-Phenylendiamin-2,5-disulfonsäure | do. | Anilin-3-sulfonsäure |
| 215 | Taurin | 1,4-Phenylendiamin-2,5-disulfonsäure | do. | Anilin-2-sulfonsäure |
| 216 | 4-Aminotoluol-3-sulfonsäure | 1,4-Phenylendiamin-2,5-disulfonsäure | do. | Taurin |
| 217 | Anilin-3-sulfonsäure | 1,4-Phenylendiamin-2,5-disulfonsäure | do. | Anilin-3-sulfonsäure |
| 218 | Anilin-2,5-disulfonsäure | 1,4-Phenylendiamin-2,5-disulfonsäure | 3-Ureidoanilin | Taurin |
| 219 | Anilin-2,5-disulfonsäure | 1,4-Phenylendiamin-2,5-disulfonsäure | 2,5-Dimethylanilin | Ammoniak |
| 220 | Anilin-2-sulfonsäure | 1,4-Phenylenliamin-2,5-disulfonsäure | 5-Methyl-2-methoxyanilin | Semicarbazid |
| 221 | Anilin-2-sulfonsäure | 1,4-Phenylendiamin-2,5-disulfonsäure | 5-Methoxyanilin | Anilin-3-sulfonsäure |
| 222 | Anilin-2-sulfonsäure | 1,4-Phenylendiamin 2,5-disulfonsäure | 3-Acetylaminoanilin | do. |
| 223 | Anilin-2-sulfonsäure | 1,3-Phenylendiamin 4,6-disulfonsäure | 3-Ureidoanilin | do. |
| 224 | Anilin-2,5-disulfonsäure | 1,3-Phenylendiamin 4,6-disulfonsäure | 3-Ureidoanilin | do. |
| 225 | Anilin-2-sulfonsäure | 5-Aminomethyl-2-naphthylamin-1,7-disulfonsäure | 3-Methylanilin | do. |
| 226 | Anilin-2,5-disulfonsäure | 5-Aminomethyl-2-naphthylamin-1-sulfonsäure | 3-Methylanilin | do. |

**Beispiel 227:**

3,46 Teile Anilin-2-sulfonsäure werden, wie in Beispiel 166 beschrieben, mit 2,0 Teilen Cyanurfluorid reaktiv acyliert. Dann werden 2,16 Teile m-Phenylendiamin, gelöst bei pH 4,0 mit 2N HCl und 20 ml Wasser, zugegeben und während 15 Minuten bei 0° kondensiert. Der pH-Wert wird mit 2N NaOH bei 4,0 bis 4,5 gehalten.

3,46 Teile Anilin-2,5-disulfonsäure werden mit 2N NaOH in 100 ml Wasser bei pH 8,0 gelöst. Man diazotiert mit 5 ml HCl und 20 ml 1N Natriumnitrit bei 0 bis 5°. Der Diazo wird in obenstehende Suspension gegossen und 3 h bei 0 bis 10° gekuppelt. Der pH-Wert wird mit 2N NaOH bei 4 bis 6 gehalten.

Die Reaktionslösung wird, wie in Beispiel 167 beschrieben, mit 2,0 Teilen Cyanurfluorid und anschliessend mit 3,23 Teilen Taurinhydrochlorid reaktiv acyliert. Der fertige Farbstoff wird mit 10 Vol.-% Kochsalz ausgesalzen und abfiltriert. Die mit 1 Teil Dinatriumhydrogenphosphat gepufferte Paste wird bei 40 bis 50° getrocknet.

Der erhaltene Farbstoff färbt Cellulosefasern gelb. In der nachfolgenden Tabelle VII sind weitere Farbstoffe

aufgeführt, deren Herstellung analog dem Beispiel 227 erfolgt, wobei als Kupplungskomponente in allen Fällen m-Phenylendiamin verwendet wird. Man erhält wertvolle Farbstoffe, die auf Cellulosefasern gelbe Farbtöne besitzen.

**Tabelle VII**

| Nr. | 1. Triazisubstituent– | Diazokomponente | 2. Triazinsubstituent |
|---|---|---|---|
| 228 | Anilin-2-sulfonsäure | Anilin-2,5-disulfonsäure | Anilin-3-sulfonsäure |
| 229 | do. | do. | Semicarbazid |
| 230 | do. | do. | N-Methyltaurin |
| 231 | do. | do. | o-Toluidin |
| 232 | Anilin-2,5-disulfonsäure | do. | N-Methylanilin |
| 233 | 2-Aminonaphthalin-1,5-disulfonsäure | do. | Semicarbazid |
| 234 | Anilin-2-sulfonsäure | 2-Naphthylamin-3,6,8,-trisulfonsäure | Ammoniak |
| 235 | Anilin-2-sulfonsäure | 2-Naphthylamin-4,6,8-trisulfonsäure | Semicarbazid |
| 236 | Anilin-2,5-disulfonsäure | 2-Naphthylamin-1,5-disulfonsäure | Anilin-3-sulfonsäure |
| 237 | Anilin-2,5-disulfonsäure | 2-Naphthylamin-4,8-disulfonsäure | Taurin |
| 238 | Anilin-2-sulfonsäure | Anilin-2,4-disulfonsäure | Anilin-3-sulfonsäure |
| 239 | Anilin-3-sulfonsäure | Anilin-2,5-disulfonsäure | Semicarbazid |
| 240 | Taurin | do. | Ammoniak |

**Färbevorschrift I**

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

**Färbevorschrift II**

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

**Färbevorschrift III**

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

**Färbevorschrift IV**

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,1 Liter Wasserglas enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespult und getrocknet.

**Färbevorschrift V**

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Dann imprägniert man das Gewebe mit einer 20°C warmen Lösung, die pro Liter 4 Gramm Natriumhydroxyd und 300 Gramm Natriumchlorid enthält, quetscht auf 75 % Gewichtszunahme ab, dämpft die Färbung während 30 Sekunden bei 100 bis 102°C, spült, seift während einer Viertelstunde in einer 0,3-%-igen kochenden Lösung eines nichtionogenen Waschmittels, spült und trocknet.

**Druckvorschrift**

3 Teile des gemäss Beispiel 1 erhaltenen Reaktivfarbstoffes werden unter schnellem Rühren in 100 Teile einer Stammverdickung, enthaltend 50 Teile 5-%-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespult, und anschliessend getrocknet.

## Patentansprüche

1. Reaktivfarbstoffe der Formel

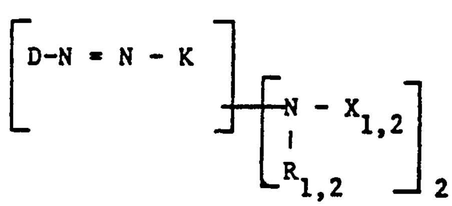

(1),

worin

D der Rest einer Diazokomponente der Benzol-, Naphthalin-, Azobenzol-, Naphthylazobenzol-, Azonaphthalin- oder Phenylazonaphthalinreihe,

K der Rest einer Kupplungskomponente der Benzol- oder Naphthalinreihe oder der heterocyclischen Reihe, ausgenommen ein Pyrazolonrest,

$R_1$ und $R_2$ unabhängig voneinander Wasserstoff oder ein gegebenenfalls substituierter $C_{1-4}$-Alkylrest, und

$X_1$ und $X_2$ unabhängig voneinander unsubstituiertes oder substituiertes Aminofluor-s-triazinyl ist, ausgenommen die Reaktivfarbstoffe der Formel

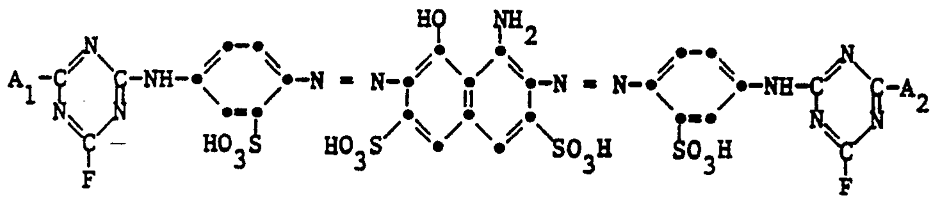

worin

$A_1$ und $A_2$ unabhängig voneinander je ein über ein Stickstoffatom an den s-Triazinring gebundener Rest eines Amins ist.

2. Reaktivfarbstoffe gemäss Anspruch 1, worin $X_1$ und $X_2$ unabhängig voneinander je ein Rest der Formel

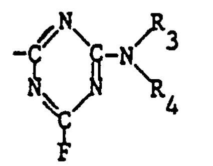

(2),

ist, worin $R_3$ und $R_4$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenäthyl, Cyclohexyl, Phenyl, das gegebenenfalls substituiert ist durch Halogen, Nitro, Cyan, Trifluormethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo ist, oder worin $R_3$ und $R_4$ zusammen mit dem Aminostickstoffatom einen Morpholino-, Piperidino- oder Piperazinorest bilden.

3. Reaktivfarbstoffe gemäss Anspruch 2 der Formel

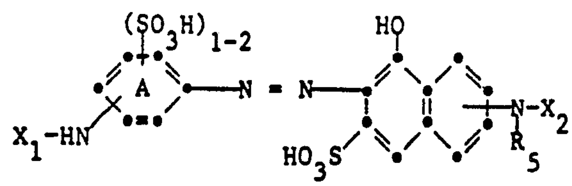

(3),

worin

$R_5$ Wasserstoff oder $C_{1-4}$-Alkyl ist,

$X_1$ und $X_2$ die in Anspruch 2 angegebenen Bedeutungen haben, und

der Benzolring A gegebenenfalls weitersubstituiert ist.

4. Reaktivfarbstoffe gemäss Anspruch 2, der Formel

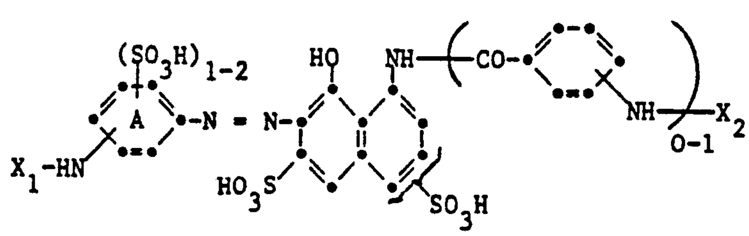

(4),

worin $X_1$ und $X_2$ die unter Formel (2) angegebenen Bedeutungen haben, und der Benzolring A gegebenenfalls weitersubstituiert ist.

5. Reaktivfarbstoffe gemäss Anspruch 3, worin der Benzolring A nicht weitersubstituiert ist.

6. Reaktivfarbstoffe gemäss Anspruch 3, worin $R_5$ Wasserstoff, Methyl oder Äthyl ist.

7. Reaktivfarbstoffe gemäss Anspruch 4, worin der Benzolring A nicht weitersubstituiert ist.

8. Reaktivfarbstoffe gemäss Anspruch 2, der Formel

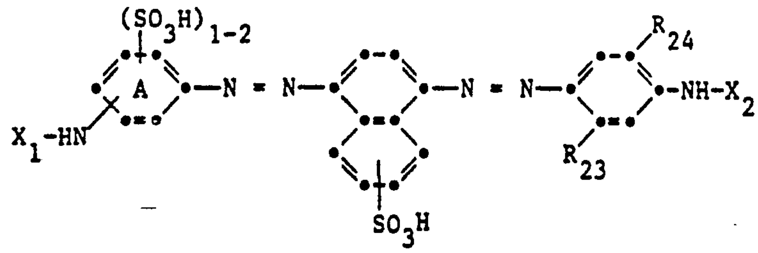

(11),

worin

$R_{23}$ und $R_{24}$ unabhängig voneinander Wasserstoff, $C_{1-4}$-Alkyl, $C_{1-4}$-Alkoxy, $C_{1-4}$-Alkanoylamino, Ureido oder Halogen sind,

$X_1$ und $X_2$ die in Anspruch 2 angegebenen Bedeutungen haben, und

der Benzolring A gegebenenfalls weitersubstituiert ist.

9. Reaktivfarbstoffe gemäss Anspruch 8, worin der Benzolring A nicht weitersubstituiert ist.

10. Reaktivfarbstoffe gemäss Anspruch 8, worin $R_{23}$ und $R_{24}$ unabhängig voneinander Wasserstoff, Methyl, Äthyl, Methoxy, Äthoxy, Acetylamino, Ureido oder Chlor sind.

11. Reaktivfarbstoffe gemäss Anspruch 2, worin $X_1$ und $X_2$ unabhängig voneinander je ein Rest der Formel (2) ist, worin die Aminogruppe $-NR_3R_4$: $-NH_2$, N-β-Hydroxyäthylamino, N,N-Di-β-Hydroxyäthylamino, β-Sulfoäthylamino, Phenylamino, das gegebenenfalls im Phenylkern substituiert ist durch Chlor, Methyl, Äthyl, Methoxy, Äthoxy, Acetylamino, Hydroxy, Carboxy, Sulfomethyl oder Sulfo, N-$C_{1-4}$-Alkyl-N-phenylamino, das gegebenenfalls im Phenylkern substituiert ist durch Chlor, Methyl oder Äthyl, N-Sulfo-$C_{1-4}$-alkyl-N-phenylamino, das gegebenenfalls im Phenylkern substituiert ist durch Chlor, Methyl oder Äthyl, N-Hydroxy-$C_{1-4}$-alkyl-N-phenylamino, oder Sulfonaphthylamino ist.

12. Verfahren zur Herstellung von Reaktivfarbstoffen gemäss Anspruch 1, dadurch gekennzeichnet, dass man Diazokomponenten der Formel

$$D-NH_2 \qquad (45)$$

oder ihre Vorprodukte, Kupplungskomponenten der Formel

$$H-K \qquad (46),$$

2 Äquivalente 2,4,6-Trifluor-s-triazin und 2 Äquivalente von gleichen oder verschiedenen Aminen durch Diazotierung, Kupplung und Kondensation in geeigneter Reihenfolge zu Reaktivfarbstoffen der Formel (1) umsetzt.

13. Verwendung der Reaktivfarbstoffe gemäss Anspruch 1, zum Färben oder Bedrucken von cellulosehaltigen Fasermaterialien.

14. Verwendung gemäss Anspruch 13, zum Färben oder Bedrucken von Baumwolle.

## Claims

1. A reactive dye of the formula

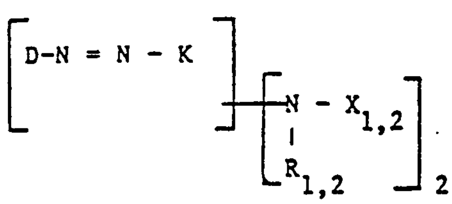

(1)

in which

D is the radical of a diazo component of the benzene, naphthalene, azobenzene, naphthylazobenzene, azonaphthalene or phenylazonaphthalene series,

K is the radical of a coupling component of the benzene or naphthalene series or of the heterocyclic series, except a pyrazolone radical,

$R_1$ and $R_2$, independently of each other, are each hydrogen or an unsubstituted or substituted $C_{1-4}$alkyl radical, and

$X_1$ and $X_2$, independently of each other, are each unsubstituted or substituted aminofluoro-s-triazinyl, except the reactive dyes of the formula

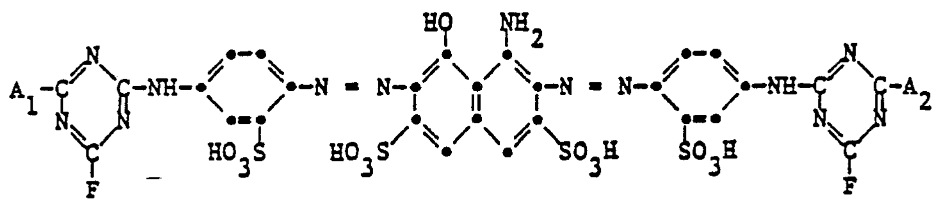

in which

$A_1$ and $A_2$ independently of each other are each a radical of an amine bonded to the s-triazine ring via a nitrogen atom.

2. A reactive dye according to claim 1 in which $X_1$ and $X_2$, independently of each other, are each a radical of the formula

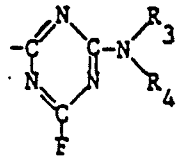

(2)

in which $R_3$ and $R_4$, independently of each other, are each hydrogen, $C_{1-4}$alkyl which is unsubstituted or substituted by halogen, cyano, $C_{1-4}$alkoxy, hydroxyl, carboxyl, sulfo or sulfato, benzyl, phenethyl, cyclohexyl, phenyl which is unsubstituted or substituted by halogen, nitro, cyano, trifluoromethyl, sulfamoyl, carbamoyl, $C_{1-4}$alkyl, $C_{1-4}$alkoxy, $C_{1-4}$alkanoylamino, benzoylamino, ureido, hydroxyl, carboxyl, sulfomethyl or sulfo, or naphthyl which is unsubstituted or substituted by halogen, nitro, $C_{1-4}$alkoxy, $C_{1-4}$alkanoylamino, hydroxyl, carboxyl or sulfo, or in which $R_3$ and $R_4$, together with the amino nitrogen atom, are a morpholino, piperidino or piperazino radical.

3. A reactive dye according to claim 2 of the formula

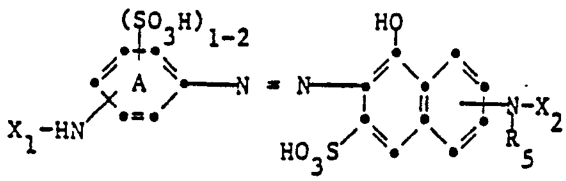

(3)

in which

$R_5$ is hydrogen or $C_{1-4}$alkyl,

$X_1$ and $X_2$ are as defined in claim 2, and

the benzene ring A can be further substituted.

4. A reactive dye according to claim 2 of the formula

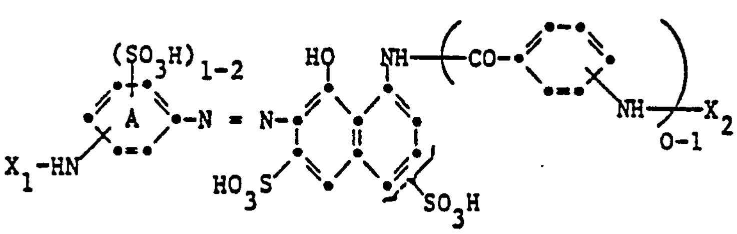

(4)

in which $X_1$ and $X_2$ are as defined under the formula (2), and the benzene ring A can be further substituted.

5. A reactive dye according to claim 3 in which the benzene ring A is not further substituted.

6. A reactive dye according to claim 3 in which $R_5$ is hydrogen, methyl or ethyl.

7. A reactive dye according to claim 4 in which the benzene ring A is not further substituted.

8. A reactive dye according to claim 2 of the formula

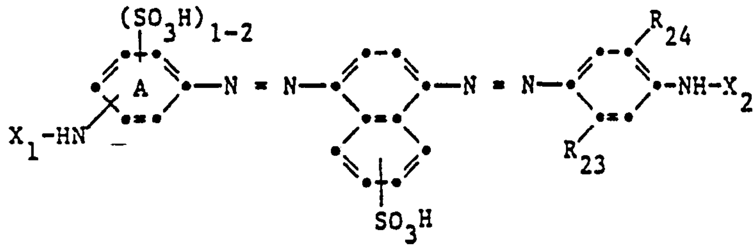

(11)

in which

$R_{23}$ and $R_{24}$, independently of each other, are each hydrogen, $C_{1-4}$alkyl, $C_{1-4}$alkoxy, $C_{1-4}$alkanoylamino, ureido or halogen,

$X_1$ and $X_2$ are as defined in claim 2, and

the benzene ring A can be further substituted.

9. A reactive dye according to claim 8 in which the benzene ring A is not further substituted.

10. A reactive dye according to claim 8 in which $R_{23}$ and $R_{24}$, independently of each other, are each hydrogen, methyl, ethyl, methoxy, ethoxy, acetylamino, ureido or chlorine.

11. A reactive dye according to claim 2 in which $X_1$ and $X_2$, independently of each other, are each a radical of the formula (2) in which the amino group $-NR_3R_4$ is $-NH_2$, N-β-hydroxyethylamino, N,N-di-β-hydroxyethylamino, β-sulfoethylamino, phenylamino which is unsubstituted or substituted in the phenyl nucleus by chlorine, methyl, ethyl, methoxy, ethoxy, acetylamino, hydroxyl, carboxyl, sulfomethyl or sulfo, N-$C_{1-4}$alkyl-N-phenylamino which is unsubstituted or substituted in the phenyl nucleus by chlorine, methyl or ethyl, N-sulfo-$C_{1-4}$alkyl-N-phenylamino which is unsubstituted or substituted in the phenyl nucleus by chlorine, methyl or ethyl, N-hydroxy-$C_{1-4}$alkyl-N-phenylamino or sulfonaphthylamino.

12. A process for preparing a reactive dye according to claim 1, which comprises reacting a diazo component of the formula

$$D - NH_2 \qquad (45)$$

or a precursor thereof, a coupling component of the formula

$$H - K \qquad (46)$$

2 equivalents of 2,4,6-trifluoro-s-triazine and 2 equivalents of identical or different amines by diazotization, coupling and condensation in a suitable order to give a reactive dye of the formula (1).

13. Use of a reactive dye according to claim 1 for dyeing or printing a cellulose-containing fibre material.

14. Use according to claim 13 for dyeing or printing cotton.

## Revendications

1. Colorants réactifs de formule

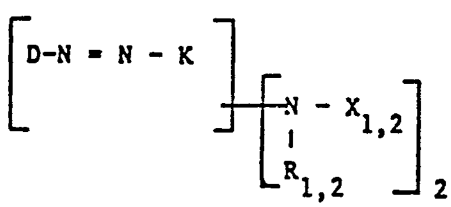

(1),

dans laquelle

D est le reste d'un composant diazo de le série du benzène, du naphtalène, de l'azobenzène, du naphtylazobenzène, de l'azonaphtalène ou du phénylazonaphtalène;

K est le reste d'un composant de copulation de la série du benzène ou du naphtalène ou de la série hétérocyclique, à l'exception d'un reste pyrazolone;

$R_1$ et $R_2$ représentent, indépendamment l'un de l'autre, un atome d'hydrogène ou un radical alkyle en $C_{1-4}$ éventuellement substitué; et

$X_1$ et $X_2$ représentent, indépendamment l'un de l'autre, un radical aminofluoro-s-triazinyle non substitué ou substitué; à l'exception des colorants réactifs de formule

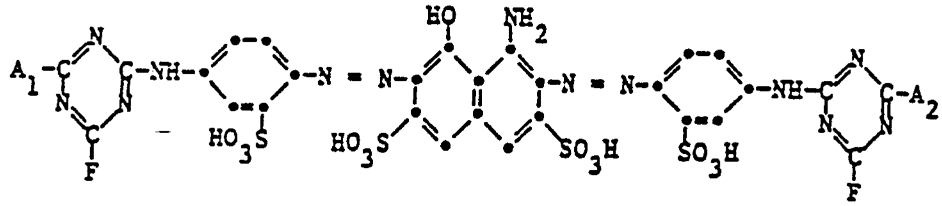

dans laquelle

$A_1$ et $A_2$ sont chacun, indépendamment l'un de l'autre, un reste d'une amine, lié au cycle triazine-s par l'intermédiaire d'un atome d'azote.

2. Colorants réactifs selon la revendication 1, dans lesquels $X_1$ et $X_2$ sont chacun, indépendamment l'un de l'autre, un reste de formule

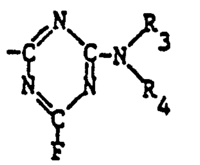

(2),

dans laquelle $R_3$ et $R_4$ représentent, indépendamment l'un de l'autre, un atome d'hydrogène ou un radical alkyle en $C_{1-4}$ qui est éventuellement substitué par un atome d'halogène ou par un groupe cyano, alcoxy en $C_{1-4}$, hydroxyle, carboxyle, sulfo ou sulfato, un radical benzyle, phénéthyle, cyclohexyle, phényle, qui est éventuellement substitué par un atome d'halogène ou par un groupe nitro, cyano, trifluorométhyle, sulfamyle, carbamyle, alkyle en $C_{1-4}$, alcoxy en $C_{1-4}$, alcanoyl($C_{1-4}$)-amino, benzoylamino, uréido, hydroxyle, carboxyle, sulfométhyle ou sulfo, ou un radical naphtyle qui est éventuellement substitué par un atome d'halogène ou par un groupe nitro, alcoxy en $C_{1-4}$, alcanoyl($C_{1-4}$)-amino, hydroxyle, carboxyle ou sulfo, ou dans laquelle $R_3$ et $R_4$ forment ensemble, conjointement avec l'atome d'azote en fonction amine, un reste morpholino, pipéridino ou pipérazino.

3. Colorants réactifs selon la revendication 2, de formule

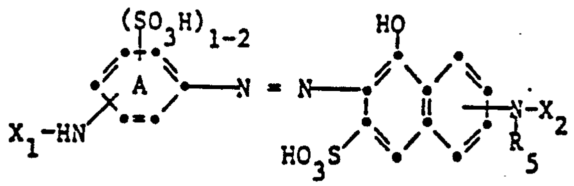

(3),

dans laquelle

$R_5$ est un atome d'hydrogène ou un groupe alkyle en $C_{1-4}$,

$X_1$ et $X_2$ ont les significations données dans la revendication 2, et

le noyau benzénique A est éventuellement substitué davantage.

4. Colorants réactifs selon la revendication 2, de formulé

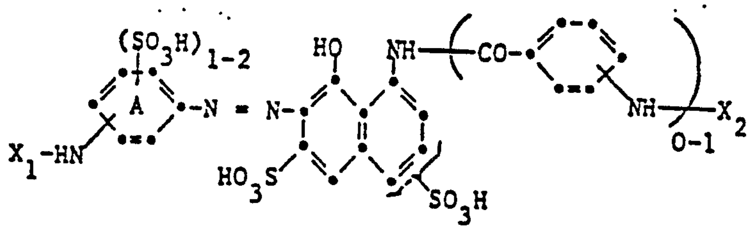

(4) ,

dans laquelle $X_1$ et $X_2$ ont les significations données sous la formule (2) et le noyau benzénique A est éventuellement substitué davantage.

5. Colorants réactifs selon la revendication 3, dans lesquels le noyau benzénique A n'est pas substitué davantage.

6. Colorants réactifs selon la revendication 3, dans lesquels $R_5$ est un atome d'hydrogène ou le groupe

méthyle ou éthyle.

7. Colorants réactifs selon la revendication 4, dans lesquels le noyau benzénique A n'est pas substitué davantage.

8. Colorants réactifs selon la revendication 2, de formule

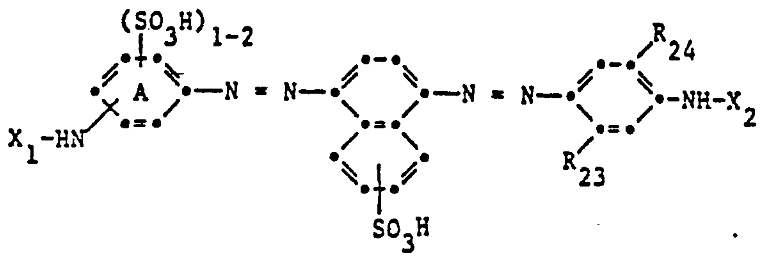

(11) ,

dans laquelle

$R_{23}$ et $R_{24}$ sont, indépendamment l'un de l'autre, un atome d'hydrogène ou d'halogène ou un groupe alkyle en $C_{1-4}$, alcoxy en $C_{1-4}$, alcanoyl($C_{1-4}$)-amino ou uréido;

$X_1$ et $X_2$ ont les significations données dans la revendication 2; et

le noyau benzénique A est éventuellement substitué davantage.

9. Colorants réactifs selon la revendication 8, dans lesquels le noyau benzénique A n'est pas substitué davantage.

10. Colorants réactifs selon la revendication 8, dans lesquels $R_{23}$ et $R_{24}$ sont, indépendamment l'un de l'autre, un atome d'hydrogène ou de chlore, ou un groupe méthyle, éthyle, méthoxy, éthoxy, acétylamino ou uréido.

11. Colorants réactifs selon la revendication 2, dans lesquels $X_1$ et $X_2$ sont chacun, independamment l'un de l'autre, un reste de formule (2) dans lequel le groupe amino $-NR_3R_4$ est $-NH_2$, un radical N-β-hydroxyéthylamino, N,N-di-β-hydroxyéthylamino, β-sulfoéthylamino, phénylamino qui est éventuellement substitué sur le noyau phényle par un atome de chlore ou par un groupe méthyle, éthyle, méthoxy, éthoxy, acétylamino, hydroxyle, carboxyle, sulfométhyle ou sulfo, un radical N-alkyl($C_{1-4}$)-N-phénylamino qui est éventuellement substitué sur le noyau phényle par un atome de chlore ou par un groupe méthyle ou éthyle, un radical N-sulfo-alkyl($C_{1-4}$)-N-phénylamino qui est éventuellement substitué sur le noyau phényle par un atome de chlore ou par un groupe méthyle ou éthyle, un radical N-hydroxy-alkyl($C_{1-4}$)-N-phénylamino ou sulfonaphtylamino.

12. Procédé pour la préparation de colorants réactifs selon la revendication 1, caractérisé par le fait que l'on fait réagir des composants diazo de formule

$$D-NH_2 \qquad (45)$$

ou leurs précurseurs, des composants de copulation de formule

$$H-K \qquad (46),$$

2 équivalents de 2,4,6-trifluoro-s-triazine et 2 équivalents d'amines identiques ou différentes, par diazotation, copulation et condensation, dans un ordre approprié, pour aboutir aux colorants réactifs de formule (1).

13. Utilisation des colorants réactifs selon la revendication 1, pour la teinture ou l'impression de matériaux fibreux cellulosiques.

14. Utilisation selon la revendication 13, pour la teinture ou l'impression du coton.